# EUROPEAN PATENT APPLICATION

(11) **EP 4 478 468 A1**
(43) Date of publication of application: **18.12.2024**
(21) Application number: 23803708.9
(22) Date of filing: 12.04.2023
(51) Int. Cl.: H01M 10/04, H01M 10/0583

(54) **BATTERY CELL, MANUFACTURING APPARATUS THEREFOR, AND MANUFACTURING METHOD THEREFOR**

(30) Priority: 09.05.2022 KR 20220056556
(71) Applicant: LG Energy Solution, Ltd., Seoul 07335 (KR)
(72) Inventor: CHOI, Seong Won, Daejeon 34122 (KR); JUNG, Su Taek, Daejeon 34122 (KR); BAE, Sangho, Daejeon 34122 (KR); KIM, Minwook, Daejeon 34122 (KR); LEE, Yong Jun, Daejeon 34122 (KR)
(74) Representative: Goddar, Heinz J.
(86) International application number: PCT/KR2023/004963
(87) International publication number: WO 2023/219285

(57) **Abstract**

An apparatus for manufacturing a battery cell according to one embodiment of the present disclosure includes an electrode reel on which an electrode sheet having plurality of electrodes formed thereon is unwound; a separator reel in which a separator sheet is unwound, with the separator sheet being folded when the electrode is seated, covering the electrode and being stacked with the electrode; a table on which the electrode and the separator sheet are seated; a pair of separator guides that guide a folding direction of the separator sheet; and a pair of upper nozzles that apply an adhesive to at least a part of the separator sheet passing between the pair of separator guides.

## Description

### [TECHNICAL FIELD]

### Cross Citation with Related Application(s)

This application claims the benefit of Korean Patent Application No. 10-2022-0056556 filed on May 9, 2022 with the Korean Intellectual Property Office, the disclosure of which is hereby incorporated by reference in its entirety.

The present disclosure relates to a battery cell, an apparatus for manufacturing the same and a method for manufacturing the same, and more particularly, to a battery cell configured to stack an electrode and a separator sheet in a Z-folding type, and capable of preventing the electrode separating from a prescribed position, an apparatus for manufacturing the same and a method for manufacturing the same.

### [BACKGROUND]

In general, there are various kinds of secondary batteries, such as a nickel cadmium battery, a nickel hydride battery, a lithium ion battery, and a lithium ion polymer battery. Such secondary batteries have been used in large-sized products that require high output, such as an electric vehicle and a hybrid electric vehicle, a power storage apparatus for storing surplus power or new and renewable energy, and a backup power storage apparatus, as well as small-sized products, such as a digital camera, a P-DVD, an MP3P, a mobile phone, a PDA, a portable game apparatus, a power tool, and an E-bike.

In order to manufacture such a secondary battery, first, an electrode active material slurry is applied to a positive electrode current collector and a negative electrode current collector to manufacture a positive electrode and a negative electrode, which are stacked on both sides of a separator, thereby forming an electrode assembly having a predetermined shape. Then, the battery assembly is housed in a battery case, and an electrolyte solution is injected to seal the battery case.

The electrode assemblies are classified into various types. There may be mentioned a simple stack type in which the positive electrodes, separators and negative electrodes are simply alternatively stacked without manufacturing a unit cell, a lamination & stack type (L&S) in which unit cells are first manufactured using positive electrodes, separators, and negative electrodes, and then these unit cells are stacked, a stack & folding type (S&F) in which a plurality of unit cells are spaced apart and attached to one surface of a separator sheet that is long on one side, and the separator sheet is repeatedly folded in the same direction from one end, a Z-folding type in which a plurality of electrodes or unit cells are alternately attached to one surface and the other surface of a separator sheet that is long on one side, and processes of folding the separator sheet from one end in a specific direction and then folding it in the opposite direction are alternately repeated, and the like. Among them, the Z-folding type has a high degree of alignment and a high degree of electrolyte impregnation, and thus, has been frequently used in recent years.

Conventionally, however, after the electrodes and the separator sheets are stacked in such a Z-folding type, no additional lamination process is performed, which may cause a problem that the electrode and separator sheet are not adhered to each other, and thus, the electrode is separated from at a prescribed position. To solve this problem, an additional lamination process was performed after stacking the electrode and the separator sheet, but the overall thickness of the stacked body in which the electrode and the separator sheet are stacked becomes thick, so that heat is not transmitted to the inside of the stacked body, which causes a problem that the adhesive strength is lowered. In addition, in order to perform such a separate laminating process, there may be a problem that the electrodes are separated from a prescribed position in the process of transferring the stacked body. This problem is aggravated further depending on the material of the separator sheet when the adhesive strength of the separator sheet itself is low.

Therefore, there is a need to develop a battery cell including a Z-folding type electrode assembly with improved battery cell performance while preventing the electrode from being separated from at a prescribed position, an apparatus for manufacturing the same and a method for manufacturing the same.

### [DETAILED DESCRIPTION OF THE INVENTION]

### [Technical Problem]

It is an object of the present disclosure to provide a battery cell configured to stack an electrode and a separator sheet in a Z-folding type, and capable of preventing the electrode separating from a prescribed position, an apparatus for manufacturing the same and a method for manufacturing the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided an apparatus for manufacturing a battery cell, comprising: an electrode reel on which an electrode sheet having plurality of electrodes formed thereon is unwound; a separator reel in which a separator sheet is unwound, with the separator sheet being folded when the electrode is seated, covering the electrode and being stacked with the electrode; a table on which the electrode and the separator sheet are seated; a pair of separator guides that guide a folding direction of the separator sheet; and a pair of upper nozzles that apply an adhesive to at least a part of the separator sheet passing between the pair of separator guides.

Among the pair of separator guides, a first separator guide that guides the separator sheet applied with the adhesive comprises at least one concave part, and the concave part may be provided at a position corresponding to the adhesive applied to the separator sheet.

The adhesive may be applied in a dot shape or in a linear shape along the longitudinal direction of the separator sheet.

The pair of upper nozzles can rotate to apply an adhesive to at least a part of the electrode seated on the table, and the pair of separator guides and the pair of upper nozzles linearly reciprocate left and right with respect to the table, with the table being fixed.

The electrode reel may comprise a first electrode reel on which a first electrode sheet having a plurality of first electrodes formed thereon is unwound; and a second electrode reel on which a second electrode sheet having a plurality of second electrodes formed thereon is unwound.

The pair of upper nozzles comprises a first upper nozzle and a second upper nozzle, the first upper nozzle applies the adhesive to the upper portion of the first electrode or to the separator sheet passing through the pair of separator guides, and the second upper nozzle may apply the adhesive to the upper portion of the second electrode or to the separator sheet passing through the pair of separator guides.

The first upper nozzle and the second upper nozzle may be arranged on both sides with the pair of separator guides interposed therebetween.

The first electrode is seated on the first region of the separator sheet, and the second electrode may be seated on the second region of the separator sheet.

When the first electrode is seated on the first region of the separator sheet, the first upper nozzle linearly moves on the first electrode, and when the second electrode is seated on the second region of the separator sheet, the second upper nozzle may linearly move on the second electrode.

When the first upper nozzle applies the adhesive to at least a part of the upper portion of the first electrode, the first separator guide linearly moves in a direction in which the separator sheet covers the first electrode, and when the second upper nozzle applies the adhesive to at least a part of the upper portion of the second electrode, the first separator guide may linearly move in a direction in which the separator sheet covers the second electrode.

The apparatus may comprise a lower nozzle that applies the adhesive to a lower portion of the first electrode and a lower portion of the second electrode, respectively.

The apparatus may further comprise a first header that attracts the first electrode to seat it in the first region; and a second header that attracts the second electrode to seat it in the second region.

When the first electrode is attracted to the first header, the lower nozzle applies the adhesive to the lower portion of the first electrode, and when the second electrode is attracted to the second header, the lower nozzle may apply the adhesive to the lower portion of the second electrode.

The apparatus may further comprise a first transfer device that transfers the first electrode toward the table; and a second transfer device that transfers the second electrode toward the table.

The first transfer device comprises a first groove that is opened toward the first electrode, so that the lower nozzle can apply the adhesive to the lower portion of the first electrode through the first groove, and the second transfer device comprises a second groove that is opened toward the second electrode, so that the lower nozzle can apply the adhesive to the lower portion of the second electrode through the second groove.

The electrode reel comprises a first electrode reel on which a first electrode sheet having a plurality of first electrodes formed thereon is unwound; and a second electrode reel on which a second electrode sheet having a plurality of second electrodes formed thereon is unwound, the table performs a rotational reciprocating motion between the first electrode reel and the second electrode reel, and the pair of separator guides and the pair of upper nozzles may linearly reciprocate left and right with respect to the table.

The first electrode is seated on the first region of the separator sheet, and the second electrode may be seated on the second region of the separator sheet.

The pair of upper nozzles comprises a first upper nozzle and a second upper nozzle, the first upper nozzle applies the adhesive to at least a part of a second region of the separator sheet passing between the pair of separator guides, and the second upper nozzle may apply the adhesive to at least a part of a first region of the separator sheet passing between the pair of separator guides.

When the pair of upper nozzles respectively apply the adhesive onto the separator sheet, a discharge port of the first upper nozzle or a discharge port of the second upper nozzle may rotate in a direction adjacent to the separator sheet.

The first upper nozzle and the second upper nozzle may be arranged on both sides with the pair of separator guides interposed therebetween.

The first upper nozzle linearly moves in a direction away from the table on the second region of the separator sheet at the same time when the first electrode is seated on the first region of the separator sheet, and the second upper nozzle may linearly move in a direction away from the table on the first region of the separator sheet at the same time when the second electrode is seated on the second region of the separator sheet.

The pair of separator guides linearly move in a direction toward the second electrode reel at the same time when the first upper nozzle applies the adhesive to at least a part of the second region of the separator sheet, and the pair of separator guides linearly move in a direction toward the first electrode reel at the same time when the second upper nozzle applies the adhesive to at least a part of the first region of the separator sheet.

When the application of the adhesive by the first upper nozzle is completed, the pair of separator guides linearly move in a direction in which the second region of the separator sheet applied with the adhesive covers the first electrode, and when the application of the adhesive by the second upper nozzle is completed, the pair of separator guides may linearly move in a direction in which the first region of the separator sheet applied with the adhesive covers the second electrode.

The apparatus may further comprise a lower nozzle that applies the adhesive to a lower portion of the first electrode and a lower portion of the second electrode, respectively.

The apparatus further comprises a first header that attracts the first electrode to seat it in the first region; and a second header that attracts the second electrode to seat it in the second region, wherein the first header and the second header may perform rotational reciprocating motion in a direction being located on the table.

When the first electrode is attracted to the first header, the lower nozzle applies the adhesive to the lower portion of the first electrode, and when the second electrode is attracted to the second header, the lower nozzle may apply the adhesive to the lower portion of the second electrode.

The apparatus further comprises a first transfer device that transfers the first electrode toward the table; and a second transfer device that transfers the second electrode toward the table.

The first transfer device comprises a first groove that is opened toward the first electrode, so that the lower nozzle applies the adhesive to the lower portion of the first electrode through the first groove, and the second transfer device comprises a second groove that is opened toward the second electrode, so that the lower nozzle may apply the adhesive to the lower portion of the second electrode through the second groove.

The pair of upper nozzles may rotate to apply an adhesive to at least a part of the electrode seated on the table, and the apparatus may comprise a pair of pressure rollers that press the separator sheet guided by the pair of separator guides.

The pressure roller comprises at least one concave part on its surface, and the concave part may be provided at a position corresponding to the adhesive applied to the separator sheet.

The at least one pressure roller may be located between the pair of separator guides and the table.

The at least one pressure roller may be located between the pair of separator guides.

The electrode reel may comprise a first electrode reel on which a first electrode sheet having a plurality of first electrodes formed thereon is unwound; and a second electrode reel on which a second electrode sheet having a plurality of second electrodes formed thereon is unwound.

The apparatus may further comprise a first transfer device that transfers the first electrode toward the table; and a second transfer device that transfers the second electrode toward the table.

The pair of upper nozzles comprises a first upper nozzle and a second upper nozzle, and the pair of upper nozzles may respectively apply an adhesive to the separator sheet or the electrode located on the table.

The first upper nozzle and the second upper nozzle may be arranged on both sides with the pair of separator guides interposed therebetween.

The at least one pressure roller comprises a first pressure roller and a second pressure roller, and the first pressure roller is located between the first upper nozzle and the separator guide, with the second pressure roller being located between the second upper nozzle and the separator guide.

The first electrode is seated on the first region of the separator sheet, and the second electrode may be seated on the second region of the separator sheet.

The apparatus may further comprise a first header that attracts the first electrode to seat it in the first region; and a second header that attracts the second electrode to seat it in the second region.

The pair of separator guides, the pair of upper nozzles, and the at least one pressure roller are fixed, and the table may linearly reciprocate toward the first transfer device and the second transfer device.

The table is fixed, and the pair of separator guides, the pair of upper nozzles, and the at least one pressure roller may linearly reciprocate toward the first transfer device and the second transfer device.

The apparatus may further comprise a moving box that accommodates the pair of separator guides and the pair of upper nozzles therein.

According to another embodiment of the present disclosure, there is provided a method for manufacturing a battery cell, the method comprising the steps of: cutting a first electrode sheet unwound from a first electrode reel to form a plurality of first electrodes; applying the adhesive through the first upper nozzle to a first region of the separator sheet unwound from the separator reel between a pair of separator guides, and seating the separator sheet on the table along the separator guide; seating the first electrode on a first region of the separator sheet; applying an adhesive to an upper portion of the first electrode through the first upper nozzle; and folding the separator sheet in a folding direction guided by the separator guide, so that a second region of the separator sheet covers the first electrode.

Before the step of seating the first electrode on the first region of the separator sheet, the method may further comprises applying an adhesive to the lower portion of the first electrode through a lower nozzle.

After the step of covering the upper portion of the first electrode, the method may further comprise cutting the second electrode sheet unwound from the second electrode reel to form a plurality of second electrodes; applying an adhesive to the lower portion of the second electrode through a lower nozzle; seating the second electrode on a second region of the separator sheet; applying an adhesive to the upper portion of the second electrode through a second upper nozzle; and folding the separator sheet in a folding direction guided by the separator guide, so that a first region of the separator sheet covers the second electrode.

The table is fixed, and the pair of separator guides, the first upper nozzle, and the second upper nozzle may linearly reciprocate with respect to the table.

According to another embodiment of the present disclosure, there is provided a method for manufacturing a battery cell, the method comprising the steps of: cutting a first electrode sheet unwound from a first electrode reel to form a plurality of first electrodes; seating the separator sheet unwound from the separator reel on a table along a pair of separator guides; applying an adhesive to the lower portion of the first electrode through a lower nozzle; seating the first electrode on a first region of the separator sheet; applying an adhesive through a first upper nozzle to at least a part of the second region of the separator sheet between the pair of separator guides; and folding the separator sheet in a folding direction guided by the separator guide, so that a second region of the separator sheet applied with the adhesive covers the first electrode.

After the step of covering the upper portion of the first electrode, the method may further comprise cutting the second electrode sheet unwound from the second electrode reel to form a plurality of second electrodes; applying an adhesive to the lower portion of the second electrode through a lower nozzle; seating the second electrode on a second region of the separator sheet; applying an adhesive through a first upper nozzle to at least a part of the first region of the separator sheet between the pair of separator guides; and folding the separator sheet in a folding direction guided by the separator guide, so that a first region of the separator sheet applied with the adhesive covers the second electrode.

The table performs a rotational reciprocating motion between the first electrode reel and the second electrode reel, and the separator guide and the pair of upper nozzles may linearly reciprocate left and right with respect to the table.

In the step of applying the adhesive through the first upper nozzle and the step of applying the adhesive through the second upper nozzle, a discharge port of the first upper nozzle or a discharge port of the second upper nozzle may rotate in a direction adjacent to the separator sheet.

According to yet another embodiment of the present disclosure, there is provided a method for manufacturing a battery cell, the method comprising the steps of: cutting a first electrode sheet unwound from a first electrode reel to form a plurality of first electrodes; applying an adhesive through a first upper nozzle to a first region of a separator sheet unwound from a separator reel between a pair of separator guides, and seating the separator sheet on a table along the separator guide; seating the first electrode on a first region of the separator sheet; applying an adhesive through a first upper nozzle to the upper portion of the first electrode; and folding the separator sheet in a folding direction guided by the separator guide, so that a second region of the separator sheet covers the first electrode, wherein a first pressure roller may press the separator sheet guided by the separator guide.

After the step of covering the upper portion of the first electrode, the method may further comprise cutting the second electrode sheet unwound from the second electrode reel to form a plurality of second electrodes; applying an adhesive through a second upper nozzle to a second region of the separator sheet between the pair of separator guides; seating the second electrode on a second region of the separator sheet; applying an adhesive to the upper portion of the second electrode through the second upper nozzle; and folding the separator sheet in a folding direction guided by the separator guide, so that a first region of the separator sheet covers the second electrode, wherein a second pressure roller may press the separator sheet guided by the separator guide.

The separator guide, the first upper nozzle, the second upper nozzle, the first pressure roller, and the second pressure roller are fixed, and the table may linearly reciprocate toward the first transfer device and the second transfer device.

The table is fixed, and the separator guide, the first upper nozzle, the second upper nozzle, the first pressure roller, and the second pressure roller may linearly reciprocate toward the first transfer device and the second transfer device.

Among the pair of separator guides, a first separator guide that guides the separator sheet applied with the adhesive comprises at least one concave part, and the concave part may be provided at a position corresponding to the adhesive applied to the separator sheet.

The adhesive may be applied in a dot shape or in a linear shape along the longitudinal direction of the separator sheet.

The pressure roller comprises at least one concave part on its surface, and the concave part may be provided at a position corresponding to the adhesive applied to the separator sheet.

According to yet another embodiment of the present disclosure, there is provided an electrode assembly manufactured by the battery cell manufacturing method according to embodiments of the present disclosure, in which electrodes and separator sheets are alternately stacked, wherein the electrode comprises a first electrode and a second electrode, the separator sheet has a zigzag shape formed by being folded at least twice, the separator sheet is folded in a state where the first electrode is seated on the first region of the separator sheet so that the second region of the separator sheet covers the first electrode, and is folded in a state where the second electrode is seated on the second region so that the first region of the separator sheet covers the second electrode, and an adhesive layer is formed between the electrode and the separator sheet.

The adhesive layer comprises a first adhesive layer and a second adhesive layer, the first adhesive layer is located between the lower portion of the electrode and the separator sheet, and the second adhesive layer may be located between the upper portion of the electrode and the separator sheet.

The first adhesive layer and the second adhesive layer may be respectively formed by applying an adhesive in the form of a plurality of dots.

According to a further embodiment of the present disclosure, there is provided a battery cell comprising the electrode assembly, wherein the battery cell comprises a battery case that accommodates the electrode assembly together with an electrolyte solution, and wherein the adhesive layer is dissolved in the electrolyte solution.

### [Advantageous Effects]

According to the embodiments of the present disclosure, a battery cell configured to stack an electrode and a separator sheet in a Z-folding type, and capable of preventing the electrode separating from a prescribed position, an apparatus for manufacturing the same and a method for manufacturing the same can be provided.

Further, since the adhesive is applied by a horizontal nozzle in the manufacturing process of the electrode assembly, the moving distance of the separator can be reduced, the process can be performed more efficiently and the process time can be more accurately controlled.

In addition, after the electrodes and the separator are stacked in a zigzag pattern, the press process is performed before winding the separator, whereby the winding quality can be improved and the stiffness of the battery cell can be increased.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a flowchart of a battery cell manufacturing method according to an embodiment of the present disclosure;
FIG. 2 is a schematic diagram showing a state in which an adhesive is applied to a first region of a separator sheet in a battery cell manufacturing apparatus according to an embodiment of the present disclosure;
FIG. 3 is a schematic view showing a state in which a first electrode is seated on a first region of a separator sheet in the battery cell manufacturing apparatus of FIG. 2;
FIG. 4 is a schematic diagram showing a state in which an adhesive is applied to a lower portion of the first electrode in the battery cell manufacturing apparatus of FIG. 2;
FIG. 5 is a schematic view showing a modified example of applying an adhesive to a lower portion of the first electrode of FIG. 4;
FIG. 6 is a schematic view showing a state in which an adhesive is applied to an upper portion of a first electrode while a first upper nozzle linearly moves in the battery cell manufacturing apparatus of FIG. 2;
FIG. 7 is a schematic diagram showing a state in which a separator guide linearly moves in the battery cell manufacturing apparatus of FIG. 2 and a second electrode is seated on a second region of a separator sheet;
FIG. 8 is a schematic diagram showing a state in which an adhesive is applied to an upper portion of a second electrode while a second upper nozzle linearly moves in the battery cell manufacturing apparatus of FIG. 2;
FIG. 9 is a flowchart of a battery cell manufacturing method according to another embodiment of the present disclosure;
FIG. 10 is a schematic diagram showing a state in which a first electrode is seated on a first region of a separator sheet in a battery cell manufacturing apparatus according to another embodiment of the present disclosure;
FIG. 11 is a schematic diagram showing a state in which an adhesive is applied to a lower portion of a first electrode in the battery cell manufacturing apparatus of FIG. 10;
FIG. 12 is a schematic diagram showing a modified example of applying an adhesive to a lower portion of the first electrode of FIG. 11;
FIGS. 13 and 14 are schematic diagrams showing a state in which the separator guide and the first upper nozzle linearly move simultaneously when the table rotates and moves in the battery cell manufacturing apparatus of FIG. 10, and the first upper nozzle rotates to apply the adhesive to the second region;
FIG. 15 is a schematic diagram showing a state in which a second region applied with an adhesive covers a first electrode while a separator guide linearly moves in an opposite direction in the battery cell manufacturing apparatus of FIG. 10;
FIG. 16 is a schematic diagram showing a state in which a second electrode is seated on a second region of a separator sheet in the battery cell manufacturing apparatus of FIG. 10;
FIG. 17 is a flowchart of a battery cell manufacturing method according to another embodiment of the present disclosure;
FIG. 18 is a schematic view showing a state in which an adhesive is applied to a first region of a separator sheet while a table linearly moves in a battery cell manufacturing apparatus according to another embodiment of the present disclosure;
FIG. 19 is a schematic diagram showing a state in which a first electrode is seated on a first region of a separator sheet in the battery cell manufacturing apparatus of FIG. 18;
FIG. 20 is a schematic view showing a state in which an adhesive is applied to the first electrode while the table linearly moves in the battery cell manufacturing apparatus of FIG. 18;
FIG. 21 is a schematic diagram showing a state in which an adhesive is applied to a second region of a separator sheet while a table linearly moves in the battery cell manufacturing apparatus of FIG. 18;
FIG. 22 is a schematic diagram showing a state in which a second electrode is seated on a second region of a separator sheet in the battery cell manufacturing apparatus of FIG. 18;
FIG. 23 is a battery cell manufacturing apparatus that has partially modified the battery cell manufacturing apparatus of FIG. 18, and is a schematic diagram illustrating a state in which an adhesive is applied to a first region of a separator sheet while a first upper nozzle linearly moves.
FIG. 24 is a schematic diagram showing a state in which a first electrode is seated on a first region of a separator sheet in the battery cell manufacturing apparatus of FIG. 23;
FIG. 25 is a schematic diagram showing a state in which an adhesive is applied to an upper portion of a first electrode while a first upper nozzle linearly moves in the battery cell manufacturing apparatus of FIG. 23 .
FIG. 26 is a schematic diagram showing a state in which in the battery cell manufacturing apparatus of FIG. 23, an adhesive is applied to a second region of a separator sheet while a second upper nozzle linearly moves, and a second electrode is seated in the second region of the separator sheet;
FIG. 27 is a schematic diagram showing one embodiment of a lower separator guide according to the present disclosure;
FIG. 28 is a schematic diagram showing one embodiment of a pressure roller according to the present disclosure;
FIG. 29 is a schematic view showing one embodiment of a pressure jig according to the present disclosure;
FIG. 30 is a cross-sectional view of an electrode assembly according to embodiments of the present disclosure; and
FIG. 31 is an exploded perspective view of a battery cell according to embodiments of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, the upper surface/lower surface or the upper portion/lower portion of a specific member may be determined differently depending on which direction is used as a reference. Thus, through the description, "upper surface" and "lower surface" refer to two surfaces facing each other on the z axis in the member, and "upper portion" and "lower portion" are defined as being located in opposite directions on the z-axis in the member.

Further, throughout the description, when it is referred to as "planar", it means when a target portion is viewed from the upper side, and when it is referred to as "cross-sectional", it means when a target portion is viewed from the side of a cross section cut vertically.

Now, a method and apparatus for manufacturing a battery cell according to one embodiment of the present disclosure will be described.

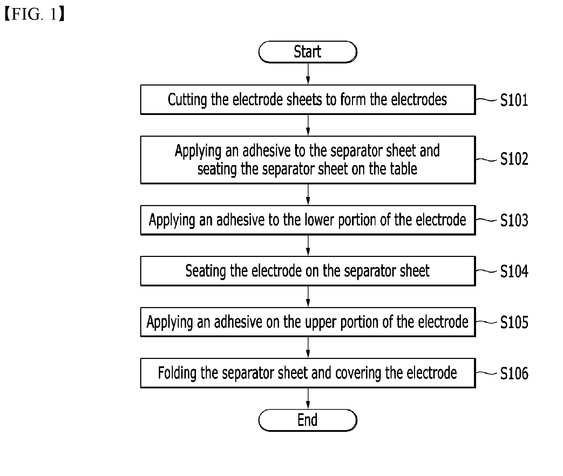

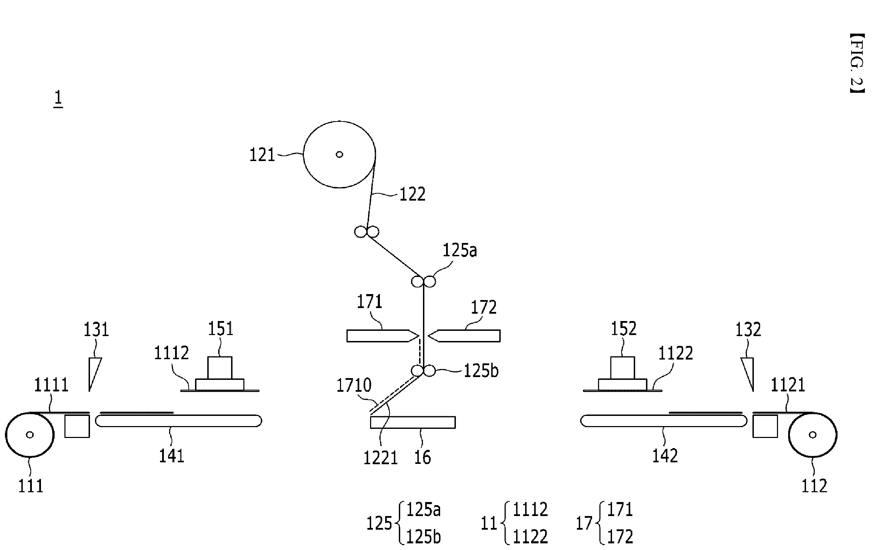

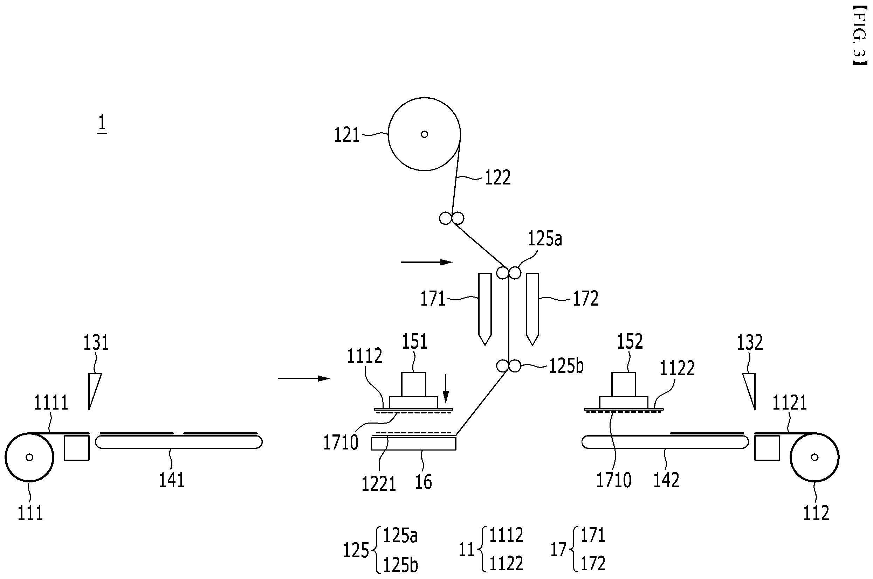

FIG. 1 is a flowchart of a battery cell manufacturing method according to an embodiment of the present disclosure. FIG. 2 is a schematic diagram showing a state in which an adhesive is applied to a first region of a separator sheet in a battery cell manufacturing apparatus according to an embodiment of the present disclosure. FIG. 3 is a schematic view showing a state in which a first electrode is seated on a first region of a separator sheet in the battery cell manufacturing apparatus of FIG. 2.

Referring to FIGS. 1, 2, and 3, a method for manufacturing a battery cell according to one embodiment of the present disclosure includes cutting the electrode sheets 1111 and 1121 to form the electrodes 11 (S101); applying an adhesive to the separator sheet 122 and seating the separator sheet 122 applied with the adhesive on the table 16 (S102); optionally applying an adhesive to the lower portion of the electrode 11 (S103); seating the electrode 11 on the separator sheet 122 (S104); applying an adhesive on the upper portion of the electrode 11 (S105); and folding the separator sheet 122 and covering the electrode 11 (S106).

Accordingly, in the method for manufacturing a battery cell according to one embodiment of the present disclosure, when stacking the electrode 11 and the separator sheet 122 in a Z-folding type, an adhesive is applied to the upper and lower portions of the electrode 11, thereby capable of preventing the electrode 11 from separating from a prescribed position.

The steps shown in the flowchart of FIG. 1 will be described in detail below with reference to FIGS. 2 to 8.

A battery cell manufacturing apparatus 1 according to FIG. 2 comprises electrode reels 111 and 112 on which an electrode sheet having plurality of electrodes 11 formed thereon is unwound; a separator reel 121 in which a separator sheet 122 is unwound, with the a separator sheet being folded when the electrode 11 is seated, covering the electrode 11 and being stacked with the electrode 11; a table 16 on which the electrode 11 and the separator sheet 122 are seated on the upper surface; a separator guide 125 that guides a folding direction of the separator sheet 122; and a pair of upper nozzles 17 that apply an adhesive to at least a part of the upper portion of the electrode 11 seated on the table 16.

The electrode reels 111 and 112 may include a first electrode reel 111 on which a first electrode sheet 1111 having a plurality of first electrodes 1112 formed thereon is unwound; and a second electrode reel 112 on which a second electrode sheet 1121 having a plurality of second electrodes 1122 formed thereon is unwound.

The electrode reels 111 and 112 are reels on which the electrode sheets 1111 and 1121 are wound, and the electrode sheets 1111 and 1121 are unwound from the electrode reels 111 and 112. Then, the electrode sheets 1111 and 1121 are cut to form the electrodes 11. More specifically, according to the present embodiment, the first electrode reel 111 is a reel on which the first electrode sheet 1111 is wound, and the first electrode sheet 1111 is unwound from the second electrode reel 111. In addition, the second electrode reel 121 is a reel on which the second electrode sheet 1121 is wound, and the second electrode sheet 1121 is unwound from the second electrode reel 121.

Here, the electrode sheets 1111 and 1121 can be manufactured by applying a slurry of an electrode active material, a conductive material, and a binder onto an electrode current collector, and then drying and pressing the slurry. However, the manufacturing method of the electrode sheets 1111 and 1121 is not limited thereto, and can be included in the present embodiment as long as it is a method of manufacturing the electrode sheets 1111 and 1121 generally in the relevant technical field.

More specifically, the first electrode sheet 1111 and the second electrode sheet 1121 may include electrode active materials having different polarities from each other. That is, the first electrode 1112 and the second electrode 1122 may be electrodes 11 having different polarities from each other. As an example, if the first electrode 1112 is a positive electrode, the second electrode 1122 may be a negative electrode. As another example, if the first electrode 1112 is a negative electrode, the second electrode 1122 may be a positive electrode.

The separator reel 121 is a reel on which the separator sheet 122 is wound, and the separator sheet 122 is unwound from the separator reel 121. After that, the separator sheet 122 is stacked with the electrode 11 formed by cutting the electrode sheets 1111 and 1121. Here, the electrode 11 and the separator sheet 122 are stacked in a Z-folding type. More specifically, according to the present embodiment, when the first electrode 1112 is seated on the separator sheet 122, one side is folded to cover the first electrode 1112, and when the second electrode 1122 is seated, the other side is folded to cover the second electrode 1122.

The table 16 may be stacked by seating the electrode 11 and the separator sheet 122 on the upper surface. More preferably, the upper surface of the table 16 is formed substantially flat, so that the electrode 11 and the separator sheet 122 can be stably stacked.

The table 16 may be arranged between the first electrode reel 111 and the second electrode reel 112. More specifically, the table 16 may be fixed between the first electrode reel 111 and the second electrode reel 112.

Thereby, the electrode 11 and the separator sheet 122 can be stacked on the table 16 in a state where the table 16 is fixed, so that the degree of alignment of the electrode 11 and the separator sheet 122 can be further improved.

The battery cell manufacturing apparatus 1 according to the present embodiment may further include a first transfer device 141 that transfers the first electrode 1112 toward the table 16; and a second transfer device 142 that transfers the second electrode 1122 toward the table 16. Here, the first transfer device 141 may transport the first electrode 1112 formed by cutting the first electrode sheet 1111 unwound from the first electrode reel 111 toward the table 16. Further, the second transfer device 142 may transport the second electrode 1122 formed by cutting the second electrode sheet 1121 unwound from the second electrode reel 112 toward the table 16.

Thereby, according to the present embodiment, the first electrode 1112 and the second electrode 1122 can be transferred to both sides of the table 16 through the first transfer device 141 and the second transfer device 142, respectively, thereby being easy to alternately stack the first electrode 1112 and the second electrode 1122 on the separator sheet 122.

The battery cell manufacturing apparatus 1 according to the present embodiment may include headers 151 and 152 that attract the electrode 11 to seat it on the separator sheet 122. More specifically, the headers 151 and 152 may further include a first header 151 that attracts the first electrode 1112 to seat it on the separator sheet 122, and a second header 152 that attracts the second electrode 1122 to seat it on the separator sheet 122. Here, the first header 151 and the second header 152 may each linearly reciprocate toward the table 16.

More specifically, the first header 151 can attract the first electrode 1112 transferred from the first transfer device 141 toward the table 16, and the second header 152 can attract the second electrode 1122 transferred from the second transfer device 142 toward the table 16. Further, the first header 151 and the second header 152 may linearly move toward the table 16.

Thereby, according to the present embodiment, the first header 151 and the second header 152 can move the electrode 11 upward above the table 16, and can stably seat the electrode 11 on the separator sheet 122.

Further, the headers 151 and 152 can measure whether the first electrode 1112 or the second electrode 1122 is distorted for each first electrode 1112 or the second electrode 1122, can correct the position if necessary, and can be accurately seated in a desired position on the separator sheet 122 located on the table 16. Thereby, according to the present embodiment, the degree of alignment between the electrodes 11 and the separator sheet 122 stacked and aligned on the table 16 can be further improved.

Referring to FIG. 2, the battery cell manufacturing apparatus 1 according to one embodiment of the present disclosure may apply the adhesive with a pair of upper nozzles 17 called 'horizontal nozzles' for the sake of convenience. More specifically, the pair of upper nozzles 17 may each perform a rotational motion. As the pair of upper nozzles 17 each perform a rotational motion, each discharge port may be directed toward the separator sheet 122.

In the embodiment of FIG. 2, the first upper nozzle 171 can rotate, for example, counterclockwise with respect to the moving direction of the separator sheet 122. Accordingly, the discharge port of the first upper nozzle 171 may be directed toward the separator sheet 122 passing between the upper and lower separator guides 125a and 125b , which will be described later. Also, the second upper nozzle 172 can rotate, for example, clockwise with respect to the moving direction of the separator sheet 122. Thereby, the discharge port of the second upper nozzle 172 may be directed toward the separator sheet 122 passing between the upper and lower separator guides 125a and 125b.

In this manner, in a state where the discharge ports of the first upper nozzle 171 and the second upper nozzle 172 are directed toward the separator sheet 122 passing between the upper and lower separator guides 125a and 125b, an adhesive can be applied to the separator sheet 122.

For the sake of convenience, FIG. 2 shows a case in which both the first upper nozzle 171 and the second upper nozzle 172 are rotated to become horizontal. However, the first upper nozzle 171 and the second upper nozzle 172 do not necessarily have to be rotated at the same time, and various modifications and changes are possible, for example, only the first upper nozzle 171 may be rotated, or only the second upper nozzle 172 may be rotated. That is, according to the process of applying the adhesive to the separator sheet 122 through a first upper nozzle 171 or the process of applying the adhesive to the separator sheet 122 through a second upper nozzle 172, the first upper nozzle 171 and the second upper nozzle 172 may rotate separately or simultaneously.

Further, regarding the rotation angles of the first upper nozzle 171 and the second upper nozzle 172, the present disclosure is not limited thereto, and various modifications and changes are possible. That is, it is sufficient if the adhesive is applied to the separator sheet 122 in a state where the discharge ports of the first upper nozzle 171 and the second upper nozzle 172 are directed toward the separator sheet 122.

Referring to FIG. 3, in the battery cell manufacturing apparatus 1 according to the present embodiment, the electrode 11 may be seated on the separator sheet 122 in a state in which the adhesive is applied to at least a part of the lower portion of the electrode 11. More specifically, according to the present embodiment, an adhesive is applied to at least a part of the lower portion of the electrode 11 when being located on the transfer devices 141 and 142, or an adhesive is applied to at least a part of the lower portion of the electrode 11 when being attracted to the headers 151 and 152.

In some cases, since an adhesive is applied to the separator sheet 122 to form an adhesive layer 1710 in FIG. 2, the electrode 11 may be seated on the separator sheet 122 in a state in which no adhesive is applied to the lower portion of the electrode 11 in FIG. 3.

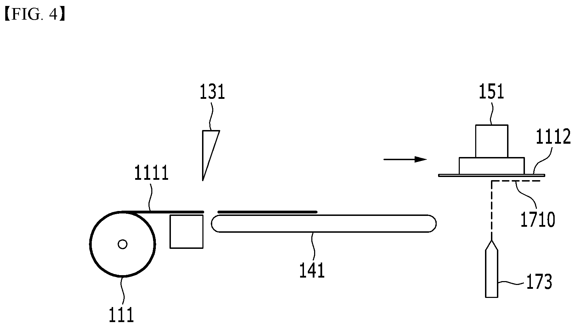

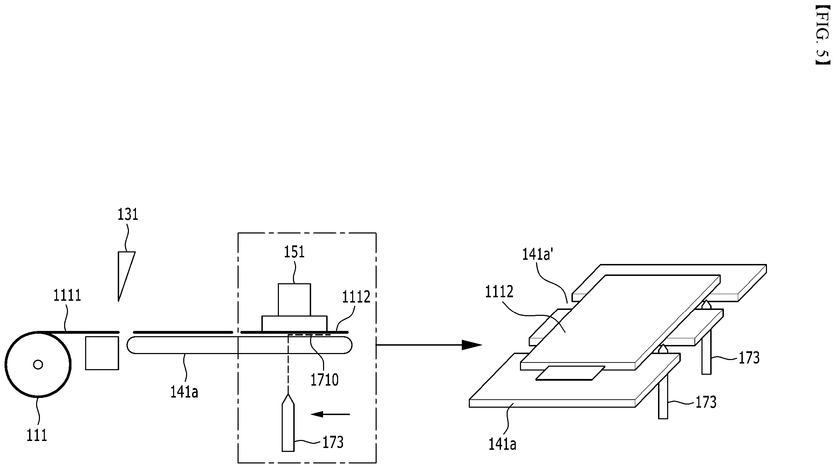

FIG. 4 is a schematic diagram showing a state in which an adhesive is applied to a lower portion of the first electrode in the battery cell manufacturing apparatus 1 according to one embodiment of the present disclosure. FIG. 5 is a schematic view showing a modified example of applying an adhesive to a lower portion of the first electrode of FIG. 4.

Referring to FIGS. 4 and 5, the battery cell manufacturing apparatus 1 according to the present embodiment may include a lower nozzle 173 that applies an adhesive to at least a part of the lower portion of the first electrode 1112. More specifically, the lower nozzle 173 may apply an adhesive to at least a part of the lower surface of the first electrode 1112. Thereby, the first adhesive layer 1710 may be formed on the lower surface of the first electrode 1112.

As an example, referring to FIG. 4, when the first electrode 1112 is attracted to the first header 151, the lower nozzle 173 may apply an adhesive to at least a part of the lower portion of the first electrode.

As another example, the first transfer device 141a includes a first groove 141a' that is opened toward the first electrode 1112, so that the lower nozzle 173 can apply an adhesive to at least a part of the lower portion of the first electrode 1112 through the first groove 141a'. Here, the first transfer device 141a may be formed with at least one first groove 141a', and the plurality of first grooves 141a' may be arranged to be spaced apart from each other. Further, as shown in FIG. 5, the first groove 141a' may be extended along the width direction of the first electrode 1112, but is not limited thereto and can be extended in various directions.

However, for convenience of explanation, the first electrode 1112 is described as an example, and even in the case of the second electrode 1122, it can be described similarly to the second header 152 or the second transfer device 142.

Here, it may be preferable that the adhesive is uniformly applied to the lower portion of the electrode 11. However, if the adhesive is applied to the whole surface under the electrode 11, the amount of adhesive applied may be excessive. In this case, the adhesive may flow to the outside of the separator sheet 122 and contaminate other parts, and when the secondary battery is manufactured, the function of generating power may not be smooth.

Thereby, according to the present embodiment, the adhesive may be preferably applied to the lower portion of the electrode 11 by a spot coating method in which the adhesive is applied in a dot shape or a linear coating method in which the adhesive is applied in a linear shape. That is, the first adhesive layer 1710 may be preferably formed in a spot pattern or a line pattern.

Unlike the same, if the amount of adhesive applied is too small, the electrode 11 is still not fixed to the separator sheet 122 while the cell moves, and may be separated from the fixed position. Therefore, it may be desirable that the interval of the region where the adhesive is applied is not excessively wide.

Further, the adhesive can be applied to the surface of the electrode 11 in the minimum amount that can ensure the adhesive strength between the electrode 11 and the separator sheet 122. Unlike the same, when the adhesive is directly applied onto the separator sheet 122, the separator sheet 122 attracts a part of the adhesive, which causes a problem that a larger amount of adhesive must be applied in order to secure the adhesive strength between the electrode 11 and the separator sheet 122.

Meanwhile, the adhesive may be dissolved in the electrolyte solution. More specifically, when the first adhesive layer 1710 formed below the electrode 11 is impregnated with an electrolyte solution, the adhesive contained in the first adhesive layer 1710 may be dissolved in the electrolyte solution. Here, the dissolution of the adhesive can mean that the adhesive is dissolved into the electrolyte solution. That is, it may mean that the region of the first adhesive layer 1710 formed under the electrode 11 is reduced, or the first adhesive layer 1710 is completely removed, so that the first adhesive layer 1710 does not remain on the lower portion of the electrode 11.

As an example, the adhesive may be an acrylate-based adhesive. Therefore, according to the present embodiment, as the acrylate-based adhesive is applied to the lower portion of the electrode 11 as an adhesive, the adhesive may be dissolved into the electrolyte solution contained in the final battery cell.

Thereby, according to the present embodiment, the first adhesive layer 1710 fixes the electrode 11 to the separator sheet 122 during the manufacturing process and prevent it from being separated from the fixed position. In addition, since the first adhesive layer 1710 is dissolved in the electrolyte solution contained in the final battery cell, it does not hinder the movement of lithium ions between the electrode and the separator, and improves battery cell performance.

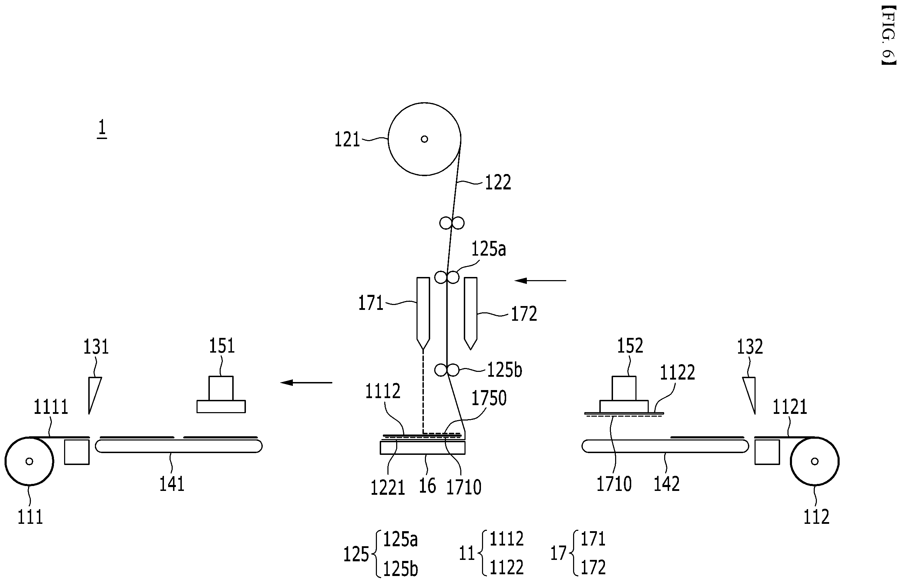

FIG. 6 is a schematic view showing a state in which an adhesive is applied to an upper portion of a first electrode while a first upper nozzle linearly moves in the battery cell manufacturing apparatus of FIG. 2.

Referring to FIG. 6, a pair of upper nozzles 17 apply an adhesive to at least a part of the upper portion of the electrode 11. More specifically, the pair of upper nozzles 17 includes a first upper nozzle 171 that applies an adhesive to at least a part of the upper portion of the first electrode 1112, and a second upper nozzle 172 that applies an adhesive to at least a part of the upper portion of the second electrode 1122.

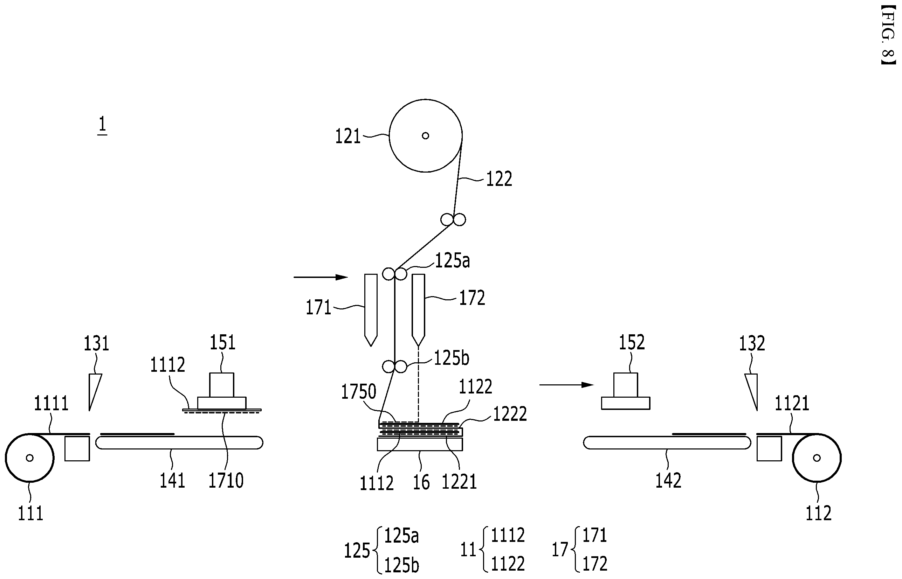

Further, the first upper nozzle 171 and the second upper nozzle 172 may be arranged on both sides with the separator sheet 122 interposed therebetween. That is, the first upper nozzle 171 may, before the separator sheet 122 covers the upper portion of the first electrode 1112, apply an adhesive to at least a part of the upper portion of the first electrode 1112 to form the second adhesive layer 1750. In addition, the second upper nozzle 172 may, before the separator sheet 122 covers the upper portion of the second electrode 1122, apply an adhesive to at least a part of the upper portion of the second electrode 1122 to form the second adhesive layer 1750 as will be described later with reference to FIG. 8.

Further, the pair of upper nozzles 17 may linearly reciprocate left and right with respect to the table 16. That is, the pair of upper nozzles 17 may apply an adhesive to at least a part of the upper portion of the electrode 11 while linearly moving in a direction from one side of the table 16 toward the other side or in a direction opposite thereto.

Further, the adhesive applied by the pair of upper nozzles 17 may be described similarly to the adhesive applied by the lower nozzle 173 described above.

Here, the pair of upper nozzles 17 may reciprocate left and right simultaneously or individually with respect to the table 16. More preferably, the pair of upper nozzles 17 can simultaneously reciprocate left and right with respect to the table 16. As an example, as shown in FIG. 6, when the first upper nozzle 171 applies the adhesive from one side of the table 16 toward the other side, the second upper nozzle 172 may apply an adhesive from the other side of the table 16 toward one side as described later with reference to FIG. 8.

Thereby, according to the present embodiment, the process time for applying the adhesive to the pair of upper nozzles 17 can be reduced, and the process efficiency can be further improved.

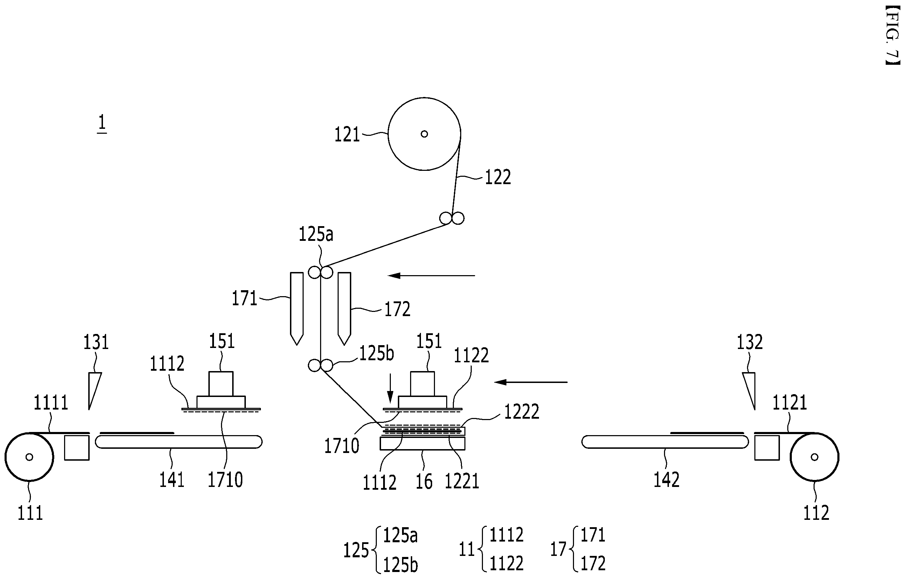

FIG. 7 is a schematic diagram showing a state in which a separator guide linearly moves in the battery cell manufacturing apparatus of FIG. 2 and a second electrode is seated on a second region of a separator sheet. Before the second electrode is seated, an adhesive may be applied to the separator sheet 122 in a state where the discharge port of the second upper nozzle 172 is directed toward the separator sheet 122 as described above with reference to FIG. 2.

Further, as described above in FIG. 3, the second electrode may be seated on the separator sheet 122 in a state in which the adhesive is applied to at least a part of the lower portion of the second electrode, and the second electrode may be seated on the separator sheet 122 in a state in which no adhesive is applied to the lower portion of the second electrode.

Referring to FIGS. 6 and 7, in the present embodiment, the separator sheet 122 may be guided in a folding direction by a separator guide 125. More specifically, the separator guide 125 may linearly reciprocate left and right with respect to the table 16.

In one example, the separator guide 125 may have a shape in which a pair of rolls are arranged horizontally, and a separator sheet 122 may be inserted between the pair of rolls. However, the shape of the separator guide 125 is not limited thereto, and can be included in the present embodiment as long as it is a shape that can control the folding direction of the separator sheet 122.

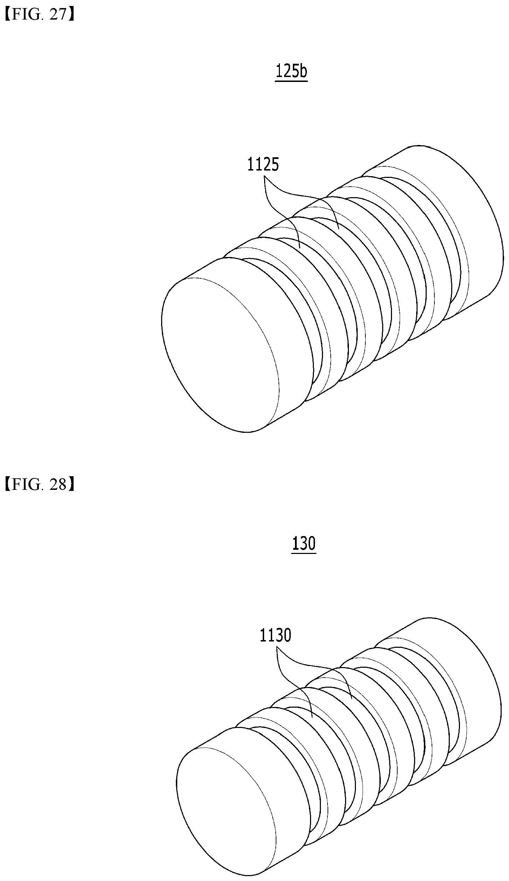

Further, the separator guide 125 may include an upper separator guide 125a and a lower separator guide 125b that are respectively located on the upper portion and the lower portion on the basis of the pair of upper nozzles 17. However, the position and number of each of the upper separator guide 125a and the lower separator guide 125b are not limited thereto, and can be included in the present embodiment as long as they are the position and number that can control the folding direction of the separator sheet 122. The lower separator guide 125b will be described in detail with reference to FIG. 27, which will be described later.

Here, when the separator guide 125 linearly reciprocates toward the first transfer device 141 and the second transfer device 142 with respect to the table 16, the separator sheet 122 may be folded along the moving direction of the separator guide 125 so that the separator sheet 122 can cover the electrode 11.

As an example, referring to FIGS. 6 and 7, in a state in which the first electrode 1112 is seated on the first region 1221 of the separator sheet 122, the separator guide 125 linearly moves toward the first transfer device 141, and the second region 1222 of the separator sheet 122 may cover the upper portion of the first electrode 1112.

Here, the first region 1221 of the separator sheet 122 refers to a region of the separator sheet 122 to which the first electrode 1112 is attached. In some cases, the first region 1221 refers to a region of the separator sheet 122 to which the first electrode 1112 is attached while covering the second electrode 1122. Further, the second region 1222 refers to a region of the separator sheet 122 to which the second electrode 1122 is attached while covering the first electrode 1112. In other words, the first electrode 1112 is seated on the first region 1221 of the separator sheet 122, and the second electrode 1122 may be seated on the second region 1222 of the separator sheet 122.

Further, the separator guide 125 simultaneously reciprocates left and right with respect to the table 16 together with the pair of upper nozzles 17, or the separator guide 125 and the pair of upper nozzles 17 can each reciprocate left and right.

That is, in the present embodiment, when the first upper nozzle 171 applies the adhesive to at least a part of the upper portion of the first electrode 1112 as shown in FIGS. 6 and 7, the separator guide 125 linearly moves in a direction in which the separator sheet 122 covers the first electrode 1112. Further, as will be described later with reference to FIG. 8, when the second upper nozzle 172 applies the adhesive to at least a part of the upper portion of the second electrode 1122, the separator guide 125 may linearly move in a direction in which the separator sheet 122 covers the second electrode 1122.

Thereby, the separator guide 125 may allow the separator sheet 122 to cover the upper and lower portions of the electrode 11 in a Z-folding shape.

More preferably, the separator guide 125 and the pair of upper nozzles 17 may simultaneously reciprocate left and right with respect to the table 16. As an example, when the first upper nozzle 171 applies the adhesive from one side of the table 16 toward the other side as shown in FIGS. 6 and 7, the separator guide 125 may also linearly move from one side of the table 16 toward the other side to fold the separator sheet 122.

Thereby, the step of folding the separator sheet 122 by the separator guide 125 can be performed simultaneously together with the step of applying the adhesive by the pair of upper nozzles 17, so that the process time can be reduced and the process efficiency can be further improved.

FIG. 8 is a schematic diagram showing a state in which an adhesive is applied to an upper portion of a second electrode while a second upper nozzle linearly moves in the battery cell manufacturing apparatus of FIG. 2.

Referring to FIGS. 3, 7 and 8, in the battery cell manufacturing apparatus 1 according to the present embodiment, the second electrode 1122 is attracted to the second header 152 similarly to the first electrode 1112, thereby capable of performing linear reciprocating motion. As an example, as shown in FIG. 7, the second header 152 can linearly move so as to be located above the table 16 in a state where the second electrode 1122 is attracted to the second header 152. AT this time, the second electrode 1122 may be seated on the second region 1222 of the separator sheet 122. In addition, the second electrode 1122 and the second header 152 can be described similarly to the first upper nozzle 171 described above.

Further, similarly to the first upper nozzle 171, the second upper nozzle 172 may linearly reciprocate with respect to the table 16. As an example, as the second upper nozzle 172 moves from one side of the table 16 toward the other side, an adhesive may be applied to at least a part of the upper portion of the second electrode 1122. In addition, the second upper nozzle 172 may be described similarly to the first upper nozzle 171 described above.

Using the battery cell manufacturing apparatus 1 as described above, a battery cell manufacturing method according to one embodiment of the present disclosure may be performed as follows.

First, referring to FIGS. 1 and 2, when the first electrode sheet 1111 is unwound from the first electrode reel 111, the first cutter 131 cuts the first electrode sheet 1111 to form a plurality of first electrodes 1112 (S101).

Meanwhile, while the separator sheet 122 is unwound from the separator reel 121, an adhesive is applied to the first region 1221 of the separator sheet 122 to form a first adhesive layer 1710. At this time, the discharge port of the first upper nozzle 171 applies the adhesive toward the separator sheet 122 passing through the upper separator guide 205a. The separator sheet 122 to which the adhesive is applied passes through the lower separator guide 125b and is seated on the upper surface of the table 16 (S102).

Further, the lower nozzle 173 applies an adhesive to the lower portion of the first electrode 1112 (S103). As an example, as shown in FIG. 4, the lower nozzle applies the adhesive to the lower portion of the first electrode 1112 in a state in which the first header 151 attract the first electrode 1112. As another example, as shown in FIG. 5, while the first transfer device 141 transfers the first electrode 1112, the lower nozzle 173 applies the adhesive to the lower portion of the first electrode 1112. Meanwhile, since the adhesive is applied to the first region 1221 of the separator sheet 122 on which the first electrode 1112 is seated in step S102, step S103 of applying an adhesive to the lower portion of the first electrode 1112 may or may not be performed depending on the circumstances. That is, step S103 can be selectively applied in accordance with the requirements of the environment and battery cell in which the present disclosure is realized.

Further, referring to FIGS. 1 and 2, the first header 151 may linearly move on the table 16 while attracting the first electrode 1112. And, if the first header 151 is located above the table 16, as shown in FIG. 3, the first header 151 seats the first electrode 1112 on which the first adhesive layer 1710 is formed on the first region 1221 of the separator sheet 122 (S104).

Further, referring to FIGS. 1 and 6, when the first electrode 1112 is seated on the first region 1221 of the separator sheet 122, the first upper nozzle 171 may apply an adhesive to the upper portion of the first electrode 1112 (S105). Here, as the first upper nozzle 171 moves toward the first transfer device 141, a second adhesive layer 1750 may be formed on the upper portion of the first electrode 1112.

Further, referring to FIGS. 1 and 7, in a state in which at least a part of the second adhesive layer 1750 is formed on the upper portion of the first electrode 1112, the separator guide 125 moves in the same direction as the moving direction of the first upper nozzle 171, so that one side of the separator sheet 122 is folded, and the second area 1222 of the separator sheet 122 covers the first electrode 1112 (S106).

Meanwhile, as shown in FIG. 3, when the second electrode sheet 1121 is unwound from the second electrode reel 112, the second cutter 132 cuts the second electrode sheet 1121. Then, a plurality of second electrodes 1122 are formed. When the second transfer device 142 transfers the second electrode 1122, the second header 152 attracts the second electrode 1122. Here, similarly to the first electrode 1112, a first adhesive layer 1710 formed by applying an adhesive from the lower nozzle 173 may be located at the lower portion of the second electrode 1122.

Further, as shown in FIG. 7, when the second region 1222 of the separator sheet 122 covers the first electrode 1112, the second header 152 attracting the second electrode 1122 moves toward the upper portion of the second region 1222, so that the second electrode 1122 is seated on the upper portion of the second region 1222.

Further, as shown in FIG. 8, the second upper nozzle 172 applies the adhesive to the upper portion of the second electrode 1122. Here, as the second upper nozzle 172 moves toward the second transfer device 142, a second adhesive layer 1750 may be formed on the second electrode 1122.

After that, in a state where at least a part of the second adhesive layer 1750 is formed on the upper portion of the second electrode 1122, the separator guide 125 moves in the same direction as the moving direction of the second upper nozzle 172, so that the other side of the separator sheet 122 is folded, and the first region 1221 of the separator sheet 122 covers the second electrode 1122.

That is, by repeating the above processes, the cell manufacturing method according to an embodiment of the present disclosure can be performed.

Next, a method and apparatus for manufacturing a battery cell according to another embodiment of the present disclosure will be described.

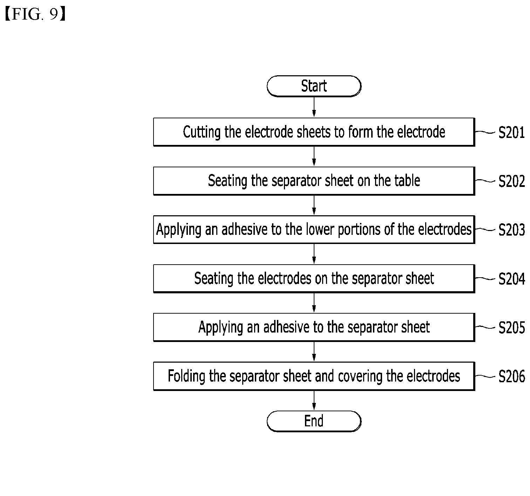

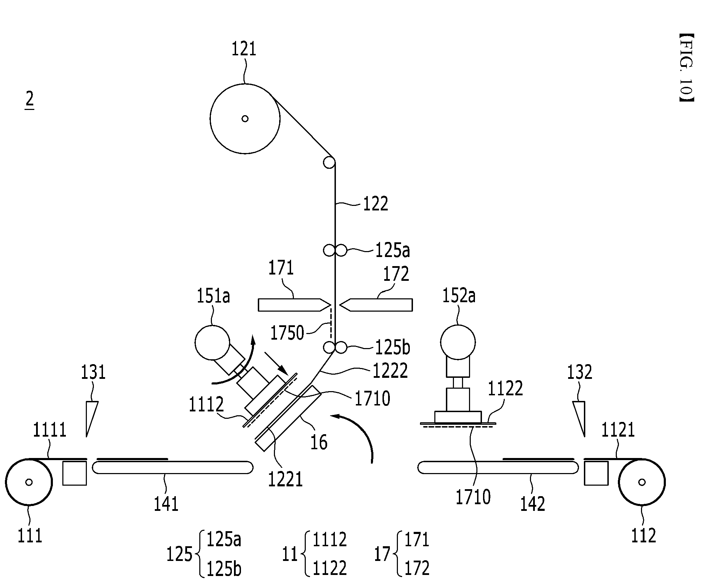

FIG. 9 is a flowchart of a battery cell manufacturing method according to another embodiment of the present disclosure. FIG. 10 is a schematic diagram showing a state in which a first electrode is seated on a first region of a separator sheet in a battery cell manufacturing apparatus according to another embodiment of the present disclosure.

Referring to FIGS. 9 and 10, a method for manufacturing a battery cell according to another embodiment of the present disclosure comprises the steps of: cutting the electrode sheets 1111 and 1121 to form the electrode 11 (S201); seating the separator sheet 122 on the table 16 (S202); applying an adhesive to the lower portions of the electrodes 1112 and 1122 (S203); seating the electrodes 1112 and 1122 on the separator sheet 122 (S204); applying an adhesive to the separator sheet 122 (S205); and folding the separator sheet 122 to which the adhesive is applied and covering the electrodes 1112 and 1122 (S206).

Next, a battery cell manufacturing apparatus 2 according to another embodiment of the present disclosure will be described. Among the components of the battery cell manufacturing apparatus 2 of the present embodiment, with respect to the same components as those of the battery cell manufacturing apparatus described above in FIGS. 2 to 8, refer to FIGS. 2 to 8. The parts different from the battery cell manufacturing apparatus 1 will be mainly described above.

Next, the steps shown in the flowchart of FIG. 9 will be described in detail with reference to FIGS. 10 to 15.

A battery cell manufacturing apparatus 2 according to another embodiment of the present disclosure includes electrode reels 111 and 112 on which an electrode sheet having plurality of electrodes 11 formed thereon is unwound; a separator reel 121 in which a separator sheet 122 is unwound, with the separator sheet being folded when the electrode 11 is seated, covering the electrode 11 and being stacked with the electrode 11; a table 16 on which the electrode 11 and the separator sheet 122 are seated; a separator guide 125 that guides a folding direction of the separator sheet 122; and a pair of upper nozzles 17 that apply an adhesive to at least a part of the separator sheet 122 guided by the electrode 11 or the separator guide 125.

In the battery cell manufacturing apparatus 2 according to the present embodiment, the table 16 can be arranged between the first electrode reel 111 and the second electrode reel 112 to perform a rotational reciprocating motion between the first electrode reel 111 and the second electrode reel 112. As an example, the table 16 may perform a rotational reciprocating motion between the first electrode reel 111 and the second electrode reel 112 in an angular range of 0 to 180 degrees with respect to the bottom surface. However, the rotation angle of the table 16 is not limited thereto, and can be rotated at various angles.

Thereby, the table 16 can perform a rotational reciprocating motion between the first electrode reel 111 and the second electrode reel 112 to assist the folding of the separator sheet 122 of the separator guide 125 while enabling the electrode 11 to be more quickly stacked on the table 16; in this respect, the process speed and efficiency can be further improved.

In particular, according to the present embodiment, as the table 16 performs a rotational reciprocating motion between the first electrode reel 111 and the second electrode reel 112, the table 16 can rotate adjacent to the first transfer device 141 and the second transfer device 142, respectively. Thereby, according to the present embodiment, the electrodes 11 transferred from the first transfer device 141 and the second transfer device 142 can be quickly stacked on the table 16.

In the battery cell manufacturing apparatus 2 according to the present embodiment, the first header 151 and the second header 152 may each perform rotational reciprocating motion in a direction of being located on the table 16. More specifically, the first header 151 and the second header 152 may perform rotational reciprocating motion in a direction facing the upper surface of the table 16. The headers 151 and 152 further include rotation driving units 151a and 152b, respectively, so as to enable rotational reciprocating motion.

In particular, according to the present embodiment, the table 16 is rotated adjacent to the first transfer device 141 and the second transfer device 142, respectively, and the first header 151 and the second header 152 may perform rotational reciprocating motion toward the table 16.

Thereby, according to the present embodiment, the first header 151 and the second header 152 can move the electrode 11 to the upper portion of the table 16 on which the electrodes 11 performs rotational reciprocating motion, and the electrode 11 can be stably seated on the separator sheet 122.

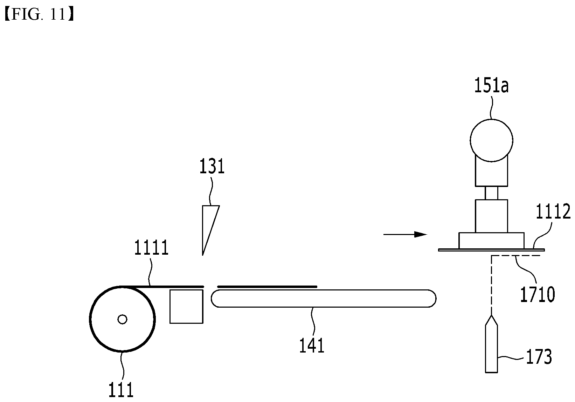

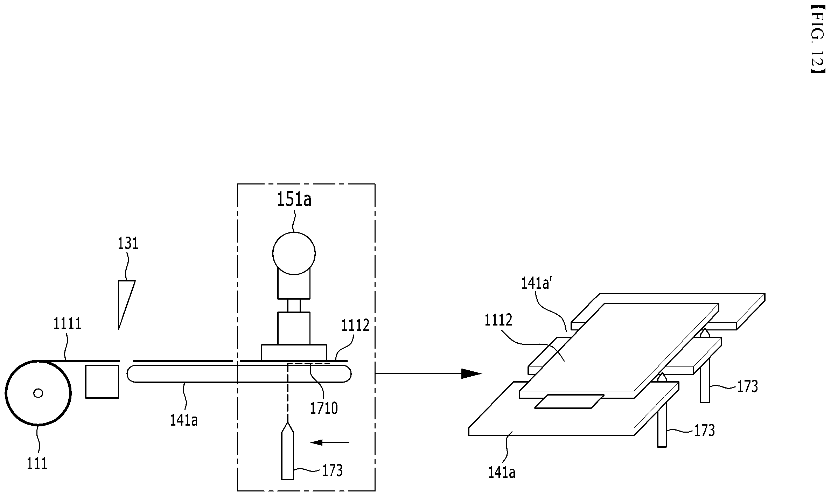

FIG. 11 is a schematic diagram showing a state in which an adhesive is applied to a lower portion of a first electrode in the battery cell manufacturing apparatus 2 of FIG. 10. FIG. 12 is a schematic diagram showing a modified example of applying an adhesive to a lower portion of the first electrode of FIG. 11.

Meanwhile, FIGS. 11 and 12 show a case where a rotation driving unit 151a is further provided to the header 151 for attracting the electrode. For the remaining components and the process of applying the adhesive to the lower portion of the first electrode, refer to the description of FIGS. 4 and 4 concerning the battery cell manufacturing apparatus 1.

The battery cell manufacturing apparatus 2 according to the present embodiment can apply an adhesive to at least a part of the lower portion of the electrode 11 during the transfer process of the electrode 11, and thus has the advantage of being able to improve the convenience of the process and the process speed.

Meanwhile, in the battery cell manufacturing apparatus 2 of FIG. 10, it may be preferable that the adhesive is uniformly applied to the lower portion of the electrode 11. Therefore, in the present embodiment, it may be preferable that the adhesive can be applied in a spot coating method in which the adhesive is applied in a dot shape or in a linear coating method in which the adhesive is applied in a linear shape onto the lower portion of the electrode 11, so that the adhesive can be applied in an appropriate amount. That is, the first adhesive layer 1710 may be preferably formed in a spot pattern or a line pattern.

Meanwhile, also in the present embodiment, the adhesive may be dissolved in the electrolyte solution in the same manner. For further description concerning the adhesive in the present embodiment, refer to the description of the adhesive described above in FIGS. 1 to 8.

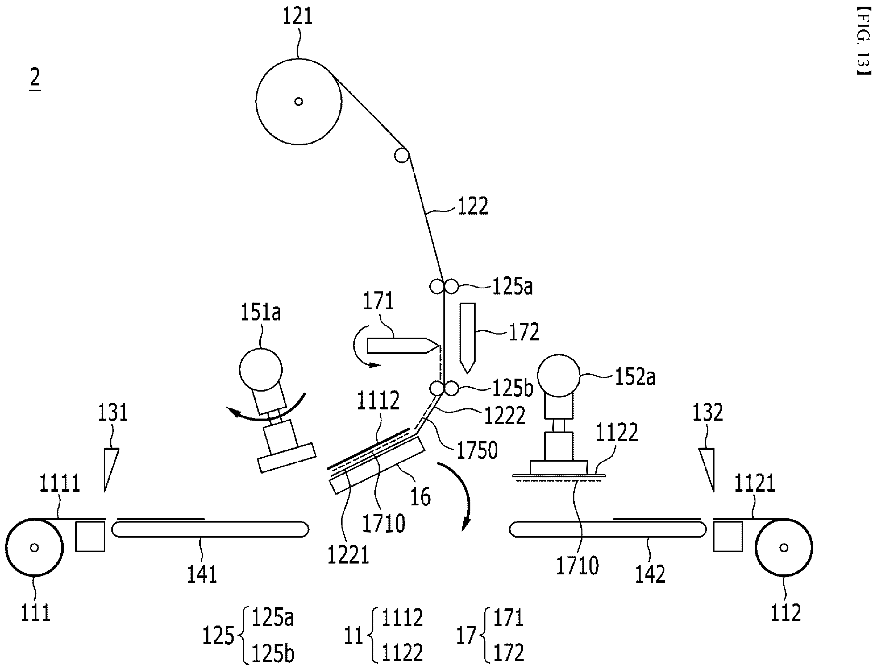

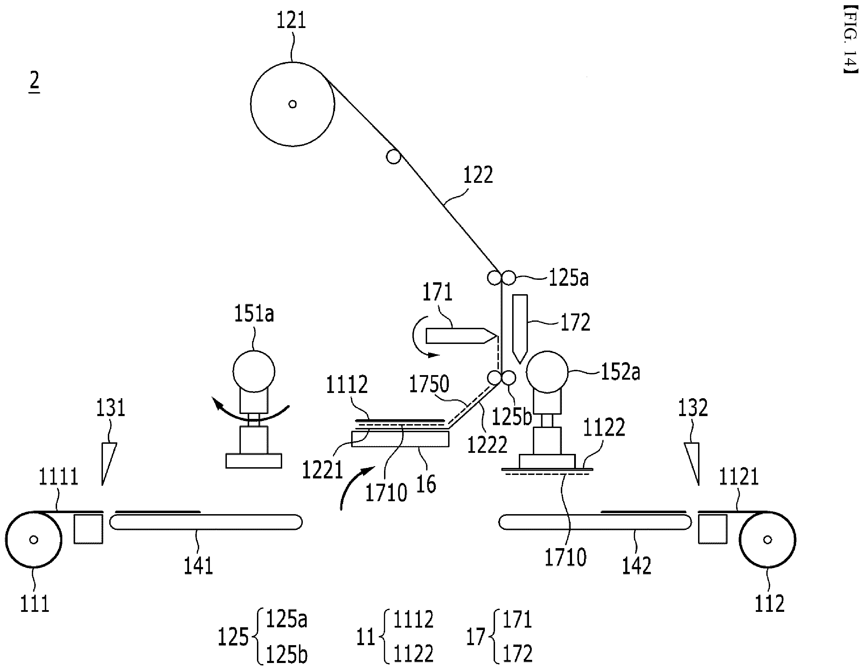

FIGS. 13 and 14 are schematic diagrams showing a state in which the separator guide and the first upper nozzle linearly move simultaneously when the table rotates and moves in the battery cell manufacturing apparatus 2 of FIG. 10, and the first upper nozzle rotates to apply the adhesive to the second region.

Referring to FIGS. 10, 13, and 14, the pair of upper nozzles 17 apply the adhesive to at least a part of the separator sheet 122 guided by the separator guide 125. More specifically, the pair of upper nozzles 17 includes a first upper nozzle 171 for applying an adhesive to at least a part of the first region 1221 of the separator sheet 122 and a second upper nozzle 172 for applying an adhesive to at least a part of the second area 1222 of the separator sheet 122.

Meanwhile, in the battery cell manufacturing apparatus 2 of FIG. 10, the adhesive may also be applied with a pair of upper nozzles 17 called 'horizontal nozzles' for the sake of convenience. That is, an adhesive can be applied to the separator sheet 122 in a state where the discharge ports of the first upper nozzle 171 and the second upper nozzle 172 are directed toward the separator sheet 122 passing between the upper and lower separator guides 125a and 125b.

For the sake of convenience, FIG. 10 also illustrates a case where both the first upper nozzle 171 and the second upper nozzle 172 are rotated by 90 degrees. However, the first upper nozzle 171 and the second upper nozzle 172 do not necessarily have to be rotated at the same time, and various modifications and changes are possible, for example, only the first upper nozzle 171 may be rotated or only the second upper nozzle 172 may be rotated, as will be described later.

For basic description of each of the first upper nozzle 171 and the second upper nozzle 172 as a pair of upper nozzles 17 in the battery cell manufacturing apparatus 2 of FIG. 10, refer to the description of the same components described above in FIG. 2. However, for the parts where the manufacturing processes of the first upper nozzle 171 and the second upper nozzle 172 of the battery cell manufacturing apparatus 2 are different from the manufacturing processes of the first upper nozzle 171 and the second upper nozzle 172 of the battery cell manufacturing apparatus 1, a detailed description will be given with reference to FIGS. 13 to 16.

Referring to FIG. 13, the first upper nozzle 171 may apply an adhesive to a surface covering the first electrode 1112 in the second region 1222 of the separator sheet 122. That is, the first upper nozzle 171 may apply the adhesive to the surface opposite to the surface to which the second electrode 1122 is attached in the second region 1222 of the separator sheet 122. At this time, the first upper nozzle 171 may rotate counterclockwise to apply the adhesive to the second region 1222 of the separator sheet 122.

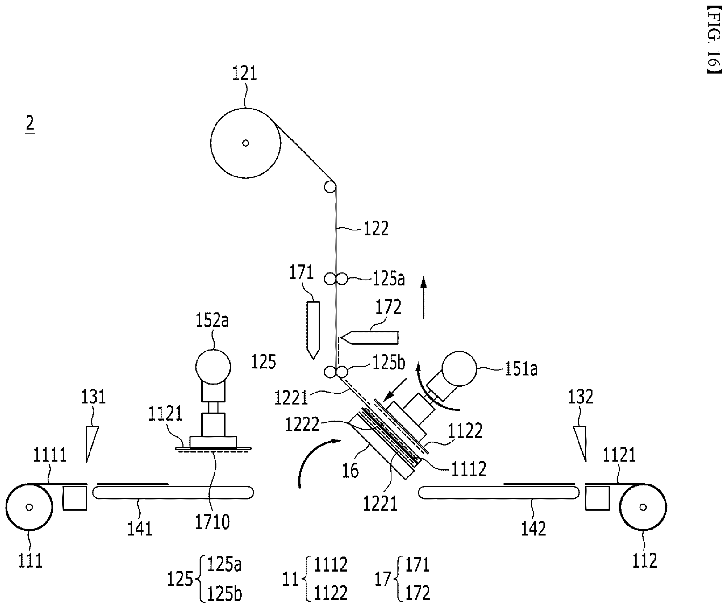

Further, referring to FIG. 16, the second upper nozzle 172 may apply an adhesive to a surface covering the second electrode 1122 in the first region 1221 of the separator sheet 122. That is, the second upper nozzle 172 may apply the adhesive to the surface opposite to the surface to which the first electrode 1112 is attached in the first region 1221 of the separator sheet 122. In this case, the second upper nozzle 172 may rotate clockwise to apply the adhesive to the first region 1221 of the separator sheet 122.

Further, referring to FIGS. 10 and 13 to 16, the first upper nozzle 171 and the second upper nozzle 172 may be arranged on both sides with the separator sheet 122 interposed therebetween. That is, the first upper nozzle 171 may, before the second region 1222 of the separator sheet 122 covers the upper portion of the first electrode 1112, apply an adhesive to at least a part of the second region 1222 to form a second adhesive layer 1750. Further, as will be described later with reference to FIG. 16, the second upper nozzle 172 may, before the first region 1221 of the separator sheet 122 covers the upper portion of the second electrode 1122, apply an adhesive to at least a part of the first region 1221 to form the second adhesive layer 1750.

Further, depending on the case, the pair of upper nozzles 17 may or may not linearly reciprocate left and right with respect to the table 16. Linear reciprocating motion can be applied in various ways depending on the positional relationship between the pair of upper nozzles 17, the table 16, and the separator sheet 122. That is, while the pair of upper nozzles 17 move linearly in the direction from one side of the table 16 to the other side or in the opposite direction, or in a fixed state, an adhesive can be applied to at least part of the first region 1221 or the second regions 1222 of the separator sheet 122.

As an example, referring to FIGS. 10, 13, and 14, the first upper nozzle 171 can linearly move on the second region 1222 of the separator sheet 122 at the same time when the first electrode 1112 is seated on the first region 1221 of the separator sheet 122. Here, the first upper nozzle 171 may apply the adhesive to at least a part of the second area 1222 while linearly moving in a direction away from the table 16. Further, as will be described later in FIG. 16, the second upper nozzle 172 can move linearly on the first region 1221 of the separator sheet 122 at the same time when the second electrode 1122 is seated on the second region 1222 of the separator sheet 122. Here, the second upper nozzle 172 may apply the adhesive to at least a part of the first region 1221 while linearly moving in a direction away from the table 16.

Further, the adhesive applied by the pair of upper nozzles 17 in the present embodiment may be described similarly to the adhesive applied by the battery cell manufacturing apparatus 1 of FIG. 2 described above.

Further, the pair of upper nozzles 17 may reciprocate left and right simultaneously or individually with respect to the table 16. More preferably, the pair of upper nozzles 17 can reciprocate left and right simultaneously with respect to the table 16. As an example, as shown in FIGS. 13 and 14, when the first upper nozzle 171 applies the adhesive from one side of the first region 1221 located on the right side of the table 16 toward the other side, the second upper nozzle 172 may apply an adhesive from one side of the second area 1222 located on the left side of the table 16 toward the other side as described later in FIG. 16.

Thereby, according to the present embodiment, it is possible to reduce the process time of the adhesive application process of the pair of upper nozzles 17. Moreover, the step of applying the adhesive to the pair of upper nozzles 17 can be performed simultaneously with the step of seating the electrodes 11 on the separator sheet 122, so that the process efficiency can be further improved.

Further, according to the present embodiment, as the table 16 performs rotational reciprocating motion between the first electrode reel 111 and the second electrode reel 112, a position and/or an angle between the pair of upper nozzles 17 and the separator sheet 122 may be changed. Accordingly, the application interval and/or the application amount of the adhesive applied to the separator sheet 122 from the pair of upper nozzles 17 may become non-uniform.

Referring to FIGS. 13 and 14, when the pair of upper nozzles 17 respectively apply the adhesive on the separator sheet 122, the discharge port of the first upper nozzle 171 or the discharge port of the second upper nozzle 172 may rotate in a direction adjacent to the separator sheet 122. The pair of upper nozzles 17 may rotate in a direction in which the discharge port of the first upper nozzle 171 or the discharge port of the second upper nozzle 172 faces the upper surface of the separator sheet 122. In other words, the pair of upper nozzles 17 can adjust the angle between the discharge port of the first upper nozzle 171 or the second upper nozzle 172 and the upper surface of the separator sheet 122.

As an example, the pair of upper nozzles 17 are rotated, so that the angle between the discharge port of the first upper nozzle 171 or the discharge port of the second upper nozzle 172 and the upper surface of the separator sheet 122 can be adjusted to be constant. However, the rotation angle of the pair of upper nozzles 17 is not limited thereto, and can be included in the present embodiment as long as it is an angle at which the application interval of the adhesive becomes uniform.

Further, although not illustrated in FIGS. 10, 13 and 14, the position of the pair of upper nozzles 17 may be moved in a direction in which the discharge port of the first upper nozzle 171 or the discharge port of the second upper nozzle 172 is adjacent to the separator sheet 122.

As an example, the position of the pair of upper nozzles 17 is moved, the height difference between the discharge port of the first upper nozzle 171 or the discharge port of the second upper nozzle 172 and the upper surface of the separator sheet 122 may be adjusted to be constant. However, the position of the pair of upper nozzles 17 is not limited thereto, and can be included in the present embodiment if it is a position where the application interval of the adhesive becomes uniform. Accordingly, the present embodiment adjusts the angle or position of the pair of upper nozzles 17, so that the application interval and/or the application amount of the adhesive applied from the pair of upper nozzles 17 can be made more uniform, and the quality can be further improved.

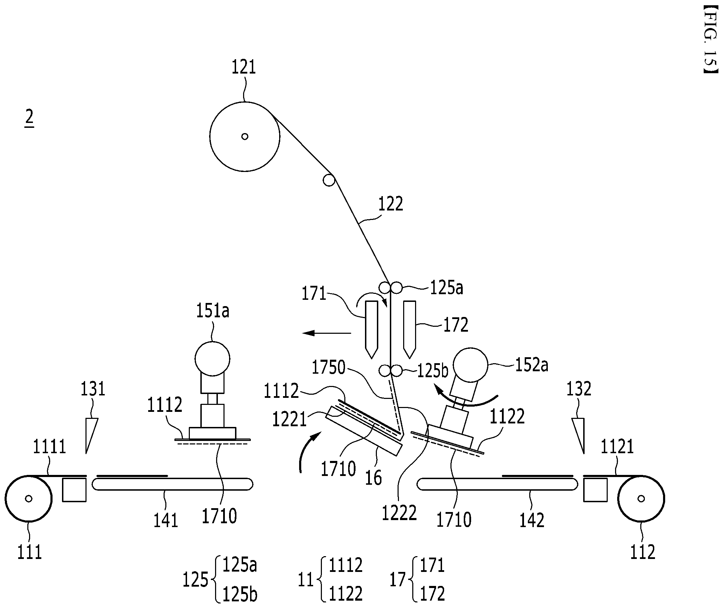

FIG. 15 is a schematic diagram showing a state in which a second region applied with an adhesive covers a first electrode while a separator guide linearly moves in an opposite direction in the battery cell manufacturing apparatus of FIG. 10.

Referring to FIGS. 13 to 15, according to the present embodiment, the folding direction of the separator sheet 122 may be guided by the separator guide 125. More specifically, the separator guide 125 may linearly reciprocate left and right with respect to the table 16.

Further, in the present embodiment, the separator guide 125 may include an upper separator guide 125a and a lower separator guide 125b that are respectively located on the upper portion and the lower portion on the basis of the pair of upper nozzles 17. For the description concerning the separator guide 125, refer to the description of the battery cell manufacturing apparatus 1 of FIG. 2 described above. In addition, the lower separator guide 125b will be described in detail with reference to FIG. 27, which will be described later.

Here, the separator guide 125 simultaneously reciprocates left and right with respect to the table 16 together with the pair of upper nozzles 17, or the separator guide 125 and the pair of upper nozzles 17 may reciprocate left and right, respectively.

More preferably, the first upper nozzle 171 applies the adhesive to at least a part of the second region 1222 of the separator sheet 122, and simultaneously, the separator guide 125 linearly moves toward the second electrode reel 112 or the second transfer device 142. Further, as will be described later with reference to FIG. 16, the second upper nozzle 172 applies the adhesive to at least part of the first region 1221 of the separator sheet 122, and simultaneously, the separator guide 125 linearly moves in the direction toward the first electrode reel 111 or the first transfer device 141.

Accordingly, the separator guide 125 forms a region in the separator sheet 122 where the adhesive can be applied from the first upper nozzle 171 or the second upper nozzle 172, so that the separator guide 125 can assist the application process of the adhesive through the pair of upper nozzles 17.

Further, when the separator guide 125 linearly reciprocates toward the first transfer device 141 and the second transfer device 142 on the basis of the table 16, the separator sheet 122 may be folded along the moving direction of the separator guide 125, so that the separator sheet 122 can cover the electrode 11.

As an example, referring to FIG. 15, in a state where the first electrode 1112 is seated on the first region 1221 of the separator sheet 122, the separator guide 125 linearly moves toward the first transfer device 141, so that the second region 1222 of the separator sheet 122 can cover an upper portion of the first electrode 1112.

More specifically, when the application of the adhesive by the first upper nozzle 171 is completed as shown in FIG. 14, the separator guide 125 linearly moves in a direction in which the second region 1222 of the separator sheet 122 applied with the adhesive covers the first electrode 1112 as shown in FIG. 15. Similarly, when the application of the adhesive through the second upper nozzle 172 is completed, the separator guide 122 linearly moves in a direction in which the first region 1221 of the separator sheet 122 applied with the adhesive covers the second electrode 1122.

Accordingly, according to the present embodiment, the separator guide 125 assists the application process of the adhesive through the pair of upper nozzles 17, and also can perform the folding process of the separator sheet 122, thereby reducing the process time, and further improving the process efficiency.

FIG. 16 is a schematic diagram showing a state in which a second electrode is seated on a second region of a separator sheet in the battery cell manufacturing apparatus of FIG. 10.

Referring to FIGS. 10 and 16, in the battery cell manufacturing apparatus 2 according to the present embodiment, similarly to the first electrode 1112, the table 16 can perform rotational reciprocating motion toward the second electrode reel 112 or the second transfer device 142. At this time, the second electrode 1122 is attracted to the second header 152 to perform rotational reciprocating motion. As an example, as shown in FIG. 16, in a state in which the second electrode 1122 is attracted to the second header 152, the second header 152 may be rotated so as to be located above the table 16. At this time, the second electrode 1122 may be seated on the second region 1222 of the separator sheet 122. In addition, the second electrode 1122 and the second header 152 may be described similarly to the first upper nozzle 171 described above.

Further, similarly to the first upper nozzle 171, the second upper nozzle 172 may linearly reciprocate with respect to the table 16. As an example, as the second upper nozzle 172 moves from one side of the first region 1221 located on the right side of the table 16 toward the other side, the adhesive may be applied to at least a part of the first region 1221.

Using such a battery cell manufacturing apparatus 2, a battery cell manufacturing method according to another embodiment of the present disclosure may be performed as follows.

First, referring to FIGS. 9 and 10, when the first electrode sheet 1111 is unwound from the first electrode reel 111, the first cutter 131 cuts the first electrode sheet 1111 to form a plurality of first electrodes 1112 (S201).

Meanwhile, when the separator sheet 122 is unwound from the separator reel 121, it is seated on the upper surface of the table 16 (S202). At this time, the table 16 may rotate toward the first electrode reel 111 or the first transfer device 141 in a state where the separator sheet 122 is seated.

Further, the lower nozzle 173 applies an adhesive to the lower portion of the first electrode 1112 (S203). As an example, as shown in FIG. 11, in a state in which the first header 151 attracts the first electrode 1112, the lower nozzle applies the adhesive to the lower portion of the first electrode 1112. As another example, as shown in FIG. 12, while the first transfer device 141 transfers the first electrode 1112, the lower nozzle 173 applies the adhesive to the lower portion of the first electrode 1112.

Further, referring to FIGS. 9 and 10, the first header 151 may rotate and move onto the table 16 while attracting the first electrode 1112n. And, if the first header 151 is located above the table 16, as shown in FIG. 10, the first header 151 seats the first electrode 1112 on which the first adhesive layer 1710 is formed on the first region 1221 of the separator sheet 122 (S204).

Further, referring to FIGS. 9, 13, and 14, when the first electrode 1112 is seated on the first region 1221 of the separator sheet 122, the separator sheet 122 is unwound from the separator reel 121, and the first upper nozzle 171 may apply an adhesive to the second region 1222 of the separator sheet 122 (S205). At this time, the discharge port of the first upper nozzle 171 applies the adhesive toward the second region 1222 of the separator sheet 122 passing through the upper separator guide 205a. The separator sheet 122 applied with the adhesive passes through the lower separator guide 125b.

In some cases, as the first upper nozzle 171 moves toward the second transfer device 142, the second adhesive layer 1750 may be formed on the second region 1222 of the separator sheet 122. At this time, the separator guide 125 and the first upper nozzle 171 may linearly move together.

Further, referring to FIGS. 9 and 15, in a state in which at least a part of the second adhesive layer 1750 is formed in the second region 1222 of the separator sheet 122, the separator guide 125 moves in a direction opposite to the moving direction of the first upper nozzle 171 toward the first transfer device 141, so that one side of the separator sheet 122 is folded and the second region 1222 of the separator sheet 122 covers the first electrode 1112 (S206).

Meanwhile, as shown in FIG. 10, when the second electrode sheet 1121 is unwound from the second electrode reel 112, the second cutter 132 cuts the second electrode sheet 1121. Then, a plurality of second electrodes 1122 are formed. When the second transfer device 142 transfers the second electrode 1122, the second header 152 attracts the second electrode 1122. Here, similarly to the first electrode 1112, a first adhesive layer 1710 formed by applying an adhesive from the lower nozzle 173 may be located at the lower portion of the second electrode 1122.

Further, as shown in FIG. 16, the table 16 rotates toward the second electrode reel 112 or the second transfer device 142 in a state where the second region 1222 of the separator sheet 122 is seated thereon. At this time, if the second region 1222 of the separator sheet 122 covers the first electrode 1112, the second header 152 attracting the second electrode 1122 moves toward the upper portion of the second region 1222 and seats the second electrode 1122 on the upper portion of the second region 1222.

Further, as shown in FIG. 16, the second upper nozzle 172 applies the adhesive to the first region 1221 of the separator sheet 122. Here, as the second upper nozzle 172 moves toward the first transfer device 141, a second adhesive layer 1750 may be formed on the first region 1221 of the separator sheet 122. At this time, the separator guide 125 and the second upper nozzle 172 may linearly move together.

After that, in a state in which at least a part of the second adhesive layer 1750 is formed on the first region 1221 of the separator sheet 122, the separator guide 125 moves in a direction opposite to the moving direction of the second upper nozzle 172, so that the other side of the separator sheet 122 is folded and the first region 1221 of the separator sheet 122 covers the second electrode 1122.

That is, by repeating the above processes, a cell manufacturing method according to another embodiment of the present disclosure can be performed.

If the cell manufacturing method according to the embodiments of the present disclosure is performed, when the electrode 11 and the separator sheet 122 are stacked in a Z-folding type, an adhesive is applied to the upper and lower portions of the electrode 11, respectively, so that the electrode 11 can be prevented from being separated from the fixe position.

Next, a method and apparatus for manufacturing a battery cell according to another embodiment of the present disclosure will be described.

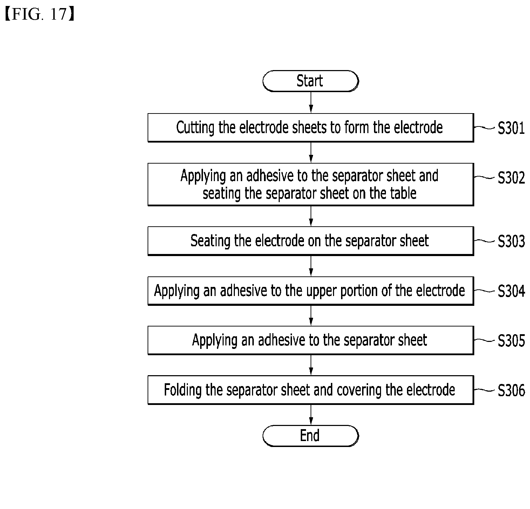

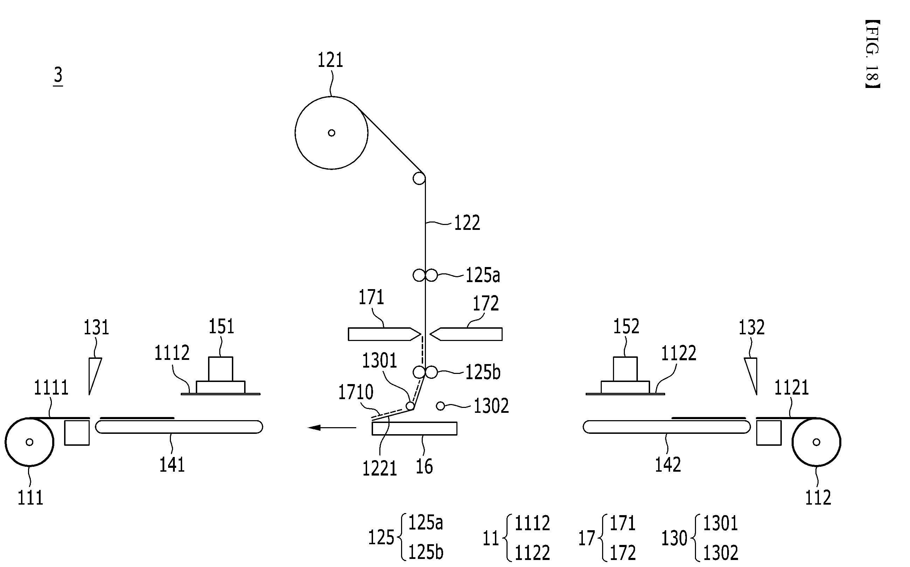

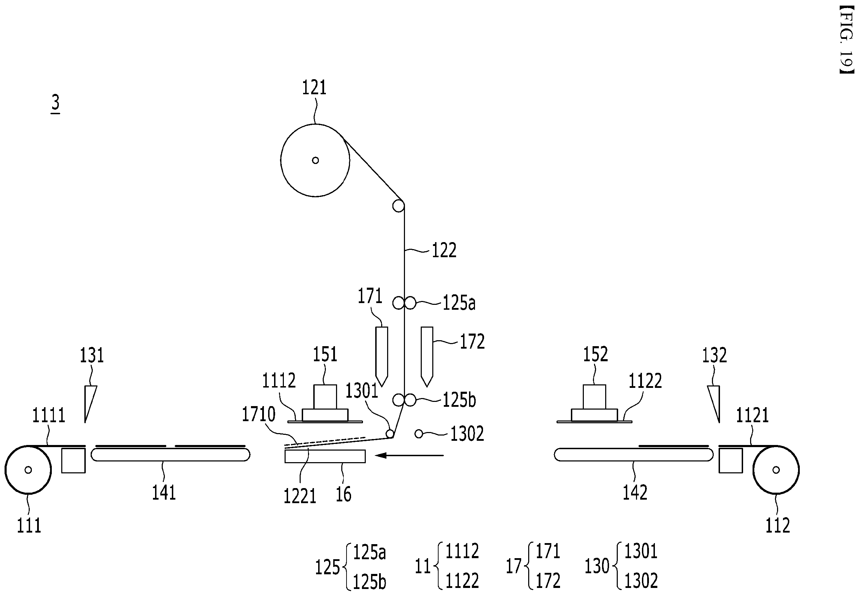

FIG. 17 is a flowchart of a battery cell manufacturing method according to another embodiment of the present disclosure. FIG. 18 is a schematic view showing a state in which an adhesive is applied to a first region of a separator sheet while a table linearly moves in a battery cell manufacturing apparatus according to another embodiment of the present disclosure. FIG. 19 is a schematic diagram showing a state in which a first electrode is seated on a first region of a separator sheet in the battery cell manufacturing apparatus of FIG. 18.

Referring to FIGS. 17 and 18, the method for manufacturing a battery cell according to another embodiment of the present disclosure includes the steps of: cutting the electrode sheets 1111 and 1121 to form the electrode 11 (S301); applying an adhesive to the separator sheet 122 and seating the separator sheet 122 applied with the adhesive on the table 16 (S302); seating the electrode 11 on the separator sheet 122 (S303); applying an adhesive to the upper portion of the electrode 11 (S304); applying an adhesive to the separator sheet 122 (S305); and folding the separator sheet 122 and covering the electrode 11 (S306).

Next, a battery cell manufacturing apparatus 3 according to yet another embodiment of the present disclosure will be described. Among the components of the battery cell manufacturing apparatus 3 of the present embodiment, with respect to the same parts as those of the battery cell manufacturing apparatus 1 described above in FIGS. 2 to 8, refer to FIGS. 2 to 8. The parts different from the battery cell manufacturing apparatus 1 will be mainly described below.

A battery cell manufacturing apparatus 3 according to another embodiment of the present disclosure includes electrode reels 111 and 112 on which electrode sheets having a plurality of electrodes 11 formed thereon are unwound; a separator reel 121 in which a separator sheet 122 is unwound, with the separator sheet being folded when the electrode 11 is seated, covering the electrode 11 and being stacked with the electrode 11; a table 16 on which the electrode 11 and the separator sheet 122 are seated; a separator guide 125 that guides the folding direction of the separator sheet 122; a pair of upper nozzles 17 that applies an adhesive to at least a part of the separator sheet 122 or the electrode 11 guided by the separator guide 125; and a pair of pressure rollers 130 that press the separator sheet 122 guided by the separator guide 125.

In the battery cell manufacturing apparatus 3 according to the present embodiment, the table 16 is arranged between the first electrode reel 111 and the second electrode reel 112, and can linearly reciprocate toward the first electrode reel 111 and the second electrode reel 112.

Thereby, the table 16 linearly reciprocates between the first electrode reel 111 and the second electrode reel 112 to assist the folding of the separator sheet 122 of the separator guide 125 while enabling the electrode 11 to be more quickly stacked on the table 16; in this respect, the process speed and efficiency can be further improved.

Referring to FIGS. 18 and 19, in the battery cell manufacturing apparatus 3 according to the present embodiment, the first header 151 and the second header 152 can linearly reciprocate toward the table 16 similarly to the battery cell manufacturing apparatus 1 of FIG. 2.

Referring to FIGS. 18 and 19, a pair of upper nozzles 17 apply an adhesive to at least a part of the upper portion of the electrode 11. More specifically, the pair of upper nozzles 17 includes a first upper nozzle 171 that applies an adhesive to at least a part of the upper portion of the first electrode 1112 and a second upper nozzle 172 that applies an adhesive to at least a part of the upper portion of the second electrode 1122.

Here, the first upper nozzle 171 may apply an adhesive to the first region 1221 of the separator sheet 122 guided by the separator guide 125 to form a first adhesive layer 1710 as shown in FIG. 18. More specifically, as the table 16 linearly moves toward the first transfer device 141 as shown in FIG. 18, the adhesive applied from the first upper nozzle 171 may form a first adhesive layer 1710 on the first region 1221 of the separator sheet 122. After that, the first electrode 1112 may be seated on the first region 1221 of the separator sheet 122 on which the first adhesive layer 1710 is formed.

Meanwhile, also in the battery cell manufacturing apparatus 3 of FIG. 18, the adhesive may also be applied by a horizontal nozzle in the same manner. More specifically, in the battery cell manufacturing apparatus 2 of FIG. 18, the adhesive may be applied by a pair of upper nozzles 17 called 'horizontal nozzles' for the sake of convenience. That is, an adhesive can be applied to the separator sheet 122 in a state where the discharge ports of the first upper nozzle 171 and the second upper nozzle 172 are directed toward the separator sheet 122 passing between the upper and lower separator guides 125a and 125b.

For the sake of convenience, FIG. 18 also illustrates a case where both the first upper nozzle 171 and the second upper nozzle 172 are rotated by 90 degrees. However, the first upper nozzle 171 and the second upper nozzle 172 do not necessarily have to be rotated at the same time, and various modifications and changes are possible, for example, only the first upper nozzle 171 may be rotated, or only the second upper nozzle 172 may be rotated, as will be described later.

For basic description of each of the first upper nozzle 171 and the second upper nozzle 172 as a pair of upper nozzles 17 in the battery cell manufacturing apparatus 3 of FIG. 18, refer to the description of the same components described above in FIG. 2. However, for the parts where the manufacturing processes of the first upper nozzle 171 and the second upper nozzle 172 of the battery cell manufacturing apparatus 3 are different from the manufacturing processes of the first upper nozzle 171 and the second upper nozzle 172 of the battery cell manufacturing apparatus 1, a detailed description will be given with reference to FIGS. 18 to 22.

Meanwhile, in the present embodiment, the adhesive can be applied in a spot coating method in which the adhesive is applied in a dot shape or in a linear coating method in which the adhesive is applied in a linear shape to the first region 1221 of the separator sheet 122. Further, in the present embodiment, the adhesive may also be dissolved in the electrolyte solution. For further description concerning the adhesive in this embodiment, refer to the description concerning the adhesive described above in FIGS. 1 to 8.

Referring to FIGS. 18 to 22, the battery cell manufacturing apparatus 3 according to the present embodiment may include a pair of pressure rollers 130 that press the separator sheet 122 guided by the separator guide 125. The present embodiment illustrates as an example a case where a pair of pressure rollers 130 are located between the table 16 and the separator guide 125. However, the present disclosure is not limited to those illustrated, and the pair of pressure rollers 130 can be deformed or changed as appropriate and disposed at a point where pressure of the separator sheet 122 is required in the process, for example, they can also be located between the upper separator guide 125a and the lower separator guide 125b. Meanwhile, the pair of pressure rollers 130 may be fixed.

As an example, the pair of pressure rollers 130 may have a shape in which a pair of rolls are arranged horizontally, and the pressure roller 130 may press one surface of the separator sheet 122. However, the shape of the pressure roller 130 is not limited thereto, and can be included in the present embodiment as long it is a shape that can press one surface of the separator sheet 122.

Accordingly, as shown in FIGS. 18 and 19, at least one of the pair of pressure rollers 130 presses one surface of the separator sheet 122 so that the tension of the separator sheet 122 can be controlled to be constant.

In particular, the pair of pressure rollers 130 may be located between the first upper nozzle 171 and the second upper nozzle 172. More specifically, the pair of pressure rollers 130 may include a first pressure roller 1301 and a second pressure roller 1302. Here, the first pressure roller 1301 is located between the first upper nozzle 171 and the separator guide 125, and the second pressure roller 1302 may be located between the second upper nozzle 172 and the separator guide 125. That is, the first upper nozzle 171 and the second upper nozzle 172 may apply the adhesive on the separator sheet 122 pressed by at least one of the pair of pressure rollers 130.

As an example, as shown in FIG. 18, the first pressure roller 1301 may press one surface of the separator sheet 122 while the adhesive is applied from the first upper nozzle 171 to the first region 1221 of the separator sheet 122. Thereby, the first pressure roller 1301 can maintain a constant height difference between the first region 1221 of the separator sheet 122 and the first upper nozzle 171, and has a relatively uniform coating amount or coating thickness of the first adhesive layer 1710. This can also be explained similarly even in the case of the second pressure roller 1302.

Further, in a state in which the separator sheet 122 is pressed by the first pressure roller 1301, the first upper nozzle 171 can adjust the height or angle between the first region 1221 of the separator sheet 122 and the first upper nozzle 171. As an example, based on the first region 1221 of the separator sheet 122, the first upper nozzle 171 moves at a constant height between the first region 1221 of the separator sheet 122 and the first upper nozzle 171, or can be rotated so that the angle between the first region 1221 of the separator sheet 122 and the first upper nozzle 171 is constant.

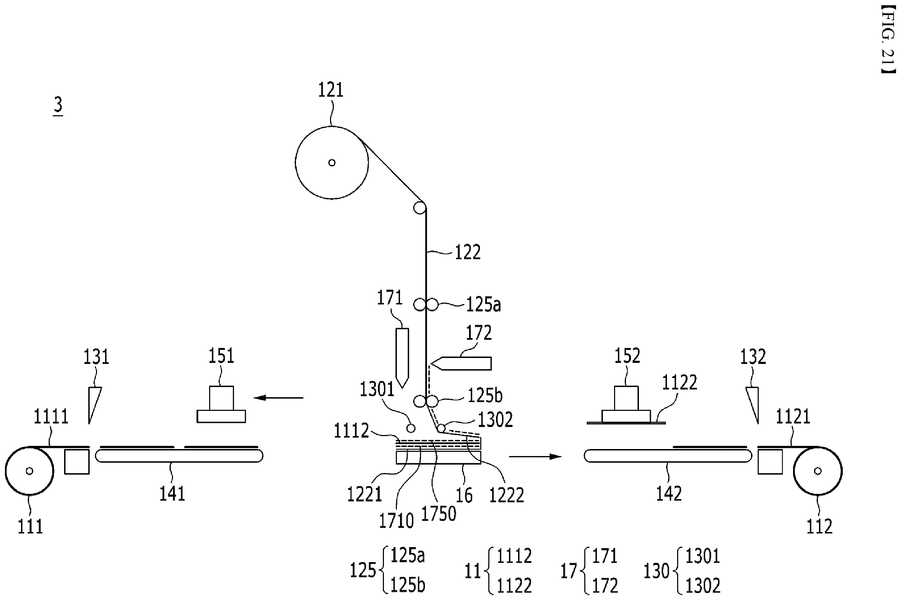

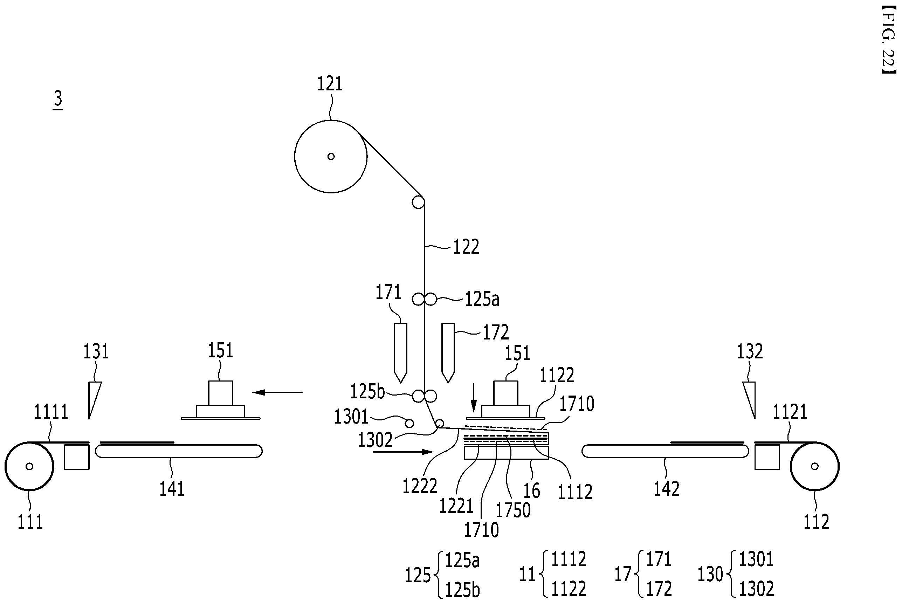

Thereby, in a state where the separator sheet 122 is pressed by the first pressure roller 1301, the height difference or angle between the first upper nozzle 171 and the first region 1221 of the separator sheet 122 can be maintained the same, so that the application reliability of the adhesive applied from the first upper nozzle 171 to the first region 1221 of the separator sheet 122 may be further improved. As shown in FIGS. 21 and 22, this can be explained similarly even in a case where the second upper nozzle 172 applies the adhesive to the second area 1222 of the separator sheet 122 in a state in which the separator sheet 122 is pressed by the second pressure roller 1302.

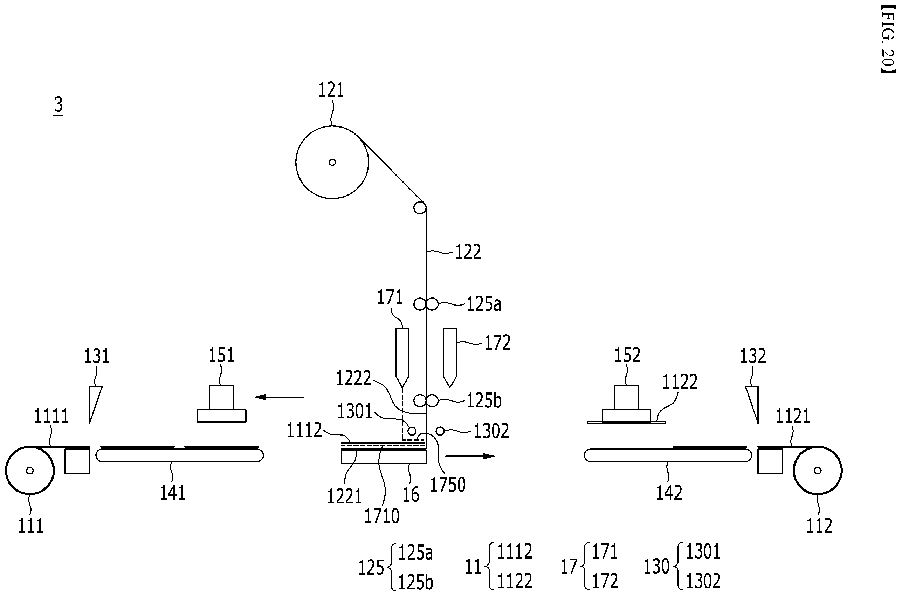

FIG. 20 is a schematic view showing a state in which an adhesive is applied to the first electrode while the table linearly moves in the battery cell manufacturing apparatus of FIG. 18. FIG. 21 is a schematic diagram showing a state in which an adhesive is applied to a second region of a separator sheet while a table linearly moves in the battery cell manufacturing apparatus of FIG. 18.

Referring to FIGS. 18 to 21, the first upper nozzle 171 and the second upper nozzle 172 may be arranged on both sides with the separator sheet 122 interposed therebetween.

That is, the first upper nozzle 171 may, before the second region 1222 of the separator sheet 122 covers the upper portion of the first electrode 1112, apply an adhesive to at least a part of the upper portion of the first electrode 1112 to form the second adhesive layer 1750 as shown in FIG. 20. Further, the second upper nozzle 172 may, after the second region 1222 of the separator sheet 122 covers the upper portion of the first electrode 1112, apply an adhesive to at least a part of the second region 1222 of the separator sheet 122 to form the first adhesive layer 1710 as shown in FIG. 21. In this case, the second upper nozzle 172 may rotate clockwise to apply the adhesive to the second region 1222 of the separator sheet 122.

Likewise in the opposite case, the second upper nozzle 172 may, before the first region 1221 of the separator sheet 122 covers the upper portion of the second electrode 1122, apply an adhesive to at least a part of the upper portion of the second electrode 1122 to form the second adhesive layer 1750. Further, the first upper nozzle 171 may, after the first region 1221 of the separator sheet 122 covers the upper portion of the second electrode 1122, apply an adhesive to at least a part of the first region 1221 of the separator sheet 122 to form the first adhesive layer 1710. In this case, the first upper nozzle 171 may rotate counterclockwise to apply the adhesive to the first region 1221 of the separator sheet 122.

In addition, the adhesive applied by the pair of upper nozzles 17 in the present embodiment can be described similarly to the adhesive applied in the battery cell manufacturing apparatus 1 of FIG. 2 described above.

Further, in the present embodiment, the table 16 can linearly reciprocate left and right with respect to the pair of upper nozzles 17. That is, the table 16 enables the adhesive to be applied to at least a part of the electrode 11 or the upper portion of the separator sheet, while linearly moving in the direction toward the first transfer device 141 or the second transfer device 142 on the basis of the pair of upper nozzles.

Further, as shown in FIGS. 20 and 21, the first upper nozzle 171 may, before the second region 1222 of the separator sheet 122 covers the upper portion of the first electrode 1112, apply an adhesive to at least a part of the upper portion of the first electrode 1112 to form a second adhesive layer 1750, and simultaneously, the second upper nozzle 172 may apply an adhesive to at least a part of the second region 1222 of the separator sheet 122 to form the first adhesive layer 1710. This is the opposite case, and the second upper nozzle 172 may, before the first region 1221 of the separator sheet 122 covers the upper portion of the second electrode 1122, apply an adhesive to at least a part of the upper portion of the second electrode 1122 to form the second adhesive layer 1750, and simultaneously, the first upper nozzle 171 may apply an adhesive to at least a part of the first region 1221 of the separator sheet 122 to form the first adhesive layer 1710.

Thus, in the present embodiment, the pair of upper nozzles 17 can simultaneously apply the adhesive to the upper portion of the separator sheet 122 or the electrode 11, respectively, so that the process time of the adhesive application process can be reduced, and the process efficiency can be further improved.

Further, as shown in FIG. 20, the pair of pressure rollers 130 may be separated by a second adhesive layer 1750 formed on the first electrode 1112. Thereby, when the table 16 moves in a straight line, the adhesive applied to the second adhesive layer 1750 formed on the first electrode 1112 can be prevented from directly contacting the pair of pressure rollers 130.

Further, as shown in FIG. 21, the second pressure roller 1302 may press the first adhesive layer 1710 and/or the second adhesive layer 1750 between the second region 1222 of the separator sheet 122 and the first electrode 1112 in a direction opposite to the moving direction of the table 16 while pressing one surface of the separator sheet 122. Thereby, the first adhesive layer 1710 and/or the second adhesive layer 1750 formed between the first electrode 1112 and the second region 1222 of the separator sheet 122 may be more uniformly applied. This can be explained similarly even in a case where the first pressure roller 1301 presses the first region 1221 of the separator sheet 122 covering the second electrode 1122 on which the first adhesive layer 1710 is formed.

FIG. 22 is a schematic diagram showing a state in which a second electrode is seated on a second region of a separator sheet in the battery cell manufacturing apparatus of FIG. 18;

Referring to FIGS. 21 and 22, in the present embodiment, the folding direction of the separator sheet 122 may be guided by the separator guide 125. Here, the pair of pressure rollers 130 can assist the folding direction of the separator sheet 122 to be guided by the separator guide 125.

As an example, the separator guide 125 may have a shape in which a pair of rolls are arranged horizontally, and in a state where the separator sheet 122 is inserted between the pair of pressure rollers 130, the second pressure roller 1302 may press the separator sheet 122. However, the shape of the separator guide 125 is not limited thereto, and can be included in the present embodiment as long as it is a shape that can control the folding direction of the separator sheet 122.

Further, also in the present embodiment, the separator guide 125 may include an upper separator guide 125a and a lower separator guide 125b that are respectively located on the upper portion and the lower portion on the basis of the pair of upper nozzles 17. For a description concerning the separator guide 125, refer to the description concerning the battery cell manufacturing apparatus 1 of FIG. 2 described above. Further, the lower separator guide 125b will be described in detail with reference to FIG. 27 described later. Further, the separator guide 125 may be fixed together with a pair of upper nozzles 17 and a pair of pressure rollers 130. Here, the table 16 linearly reciprocates toward the first transfer device 141 and the second transfer device 142 on the basis of the separator guide 125, and the separator sheet 122 guided by the separator guide 125 is folded along the moving direction of the separator guide 125, so that the separator sheet 122 can cover the electrode 11.

As an example, referring to FIGS. 21 and 22, in a state where the first electrode 1112 is seated on the first region 1221 of the separator sheet 122, the table 16 moves linearly toward the second transfer device 142, so that the second region 1222 of the separator sheet 122 can cover an upper portion of the first electrode 1112.

Thereby, as the table 16 linearly reciprocates, the step of applying the adhesive by the pair of upper nozzles 17 and the step of folding the separator sheet 122 by the separator guide 125 can be performed simultaneously, so that the process time can be reduced and the process efficiency can be further improved.

Using such a unit cell manufacturing apparatus 3, a unit cell manufacturing method according to another embodiment of the present disclosure may be performed as follows.

First, referring to FIGS. 17 and 18, when the first electrode sheet 1111 is unwound from the first electrode reel 111, the first cutter 131 cuts the first electrode sheet 1111 to form a plurality of first electrodes 1112 (S301).

Meanwhile, while the separator sheet 122 is unwound from the separator reel 121, an adhesive is applied to the first region 1221 of the separator sheet 122. At this time, the discharge port of the first upper nozzle 171 applies the adhesive toward the separator sheet 122 that has passed through the upper separator guide 205a. The separator sheet 122 applied with the adhesive passes through the lower separator guide 125b and is seated on the upper surface of the table 16 (S302). At this time, the separator sheet 122 is moved in a state of being pressed by the first pressure roller 1301 and is seated on the upper surface of the table 16. In some cases, the table 16 may linearly move toward the first transfer device 141.

Further, referring to FIGS. 17 and 19, the first header 151 may linearly move on the table 16 while attracting the first electrode 1112. And, when the first header 151 is located above the table 16, as shown in FIG. 19, the first header 151 seats the first electrode 1112 on the first region 1221 of the separator sheet 122 on which the first adhesive layer 1710 is formed (S303).

Further, referring to FIGS. 17, 20 and 21, after the first electrode 1112 is seated on the first region 1221 of the separator sheet 122, as the table 16 moves toward the second transfer device 142, the first upper nozzle 171 applies an adhesive to the upper portion of the first electrode 1112 to form a second adhesive layer 1750 (S304).

Further, an adhesive is applied to the second region 1222 of the separator sheet 122 unwound from the separator reel 121 to form a first adhesive layer 1710 (S305). The discharge port of the second upper nozzle 172 applies the adhesive toward the separator sheet 122 that has passed through the upper separator guide 205a. The separator sheet 122 applied with the adhesive passes through the lower separator guide 125b. At this time, the adhesive may be applied in a state where one surface of the separator sheet 122 is pressed by the second pressure roller 1302, and the table 16 moves towards the second transfer device 142.

Further, referring to FIGS. 17, 21 and 22, as the table 16 moves toward the second transfer device 142 on the basis of the separator guide 125, one side of the separator sheet 122 is folded so that the second region 1222 of the separator sheet 122 covers the first electrode 1112 on which the second adhesive layer 1750 is formed (S306).

Steps S304, S305 and S306 may be performed sequentially, or all three steps may occur simultaneously, and various applications can be made in accordance with the environment in which the present disclosure is realized, for example, S304 and S305 may proceed simultaneously, S305 and S306 may proceed simultaneously, and in some cases, steps S304 and S305 may be performed alternatively.

Meanwhile, as shown in FIG. 18, when the second electrode sheet 1121 is unwound from the second electrode reel 112, the second cutter 132 cuts the second electrode sheet 1121. Then, a plurality of second electrodes 1122 are formed. After that, as shown in FIG. 22, when the second transfer device 142 transfers the second electrode 1122, the second header 152 attracts the second electrode 1122. And, if the second region 1222 of the separator sheet 122 covers the first electrode 1112, the second header 152 attracting the second electrode 1122 moves toward the upper portion of the second region 1222, so that the second electrode 1122 is seated on the second region 1222 where the first adhesive layer 1710 is formed.

And, similarly to the first upper nozzle 171 of FIG. 20, the second upper nozzle 172 applies the adhesive to the upper portion of the second electrode 1122. Here, as the table 16 moves toward the first transfer device 141, the second upper nozzle 172 may form a second adhesive layer 1750 on the second electrode 1122.

After that, as the table 16 moves toward the first transfer device 141 on the basis of the separator guide 125, the other side of the separator sheet 122 is folded, so that the first region 1221 of the separator sheet 122 covers the second electrode 1122 on which the second adhesive layer 1750 is formed.

That is, by repeating the above processes, a cell manufacturing method according to yet another embodiment of the present disclosure can be performed.

Next, an embodiment in which the battery cell manufacturing apparatus of FIG. 18 is partially modified will be described. The battery cell manufacturing apparatus 3a of the present embodiment can be described similarly to the battery cell manufacturing apparatus 3 described above in FIGS. 18 to 22, and only the parts different from the battery cell manufacturing apparatus 3 will be described below.

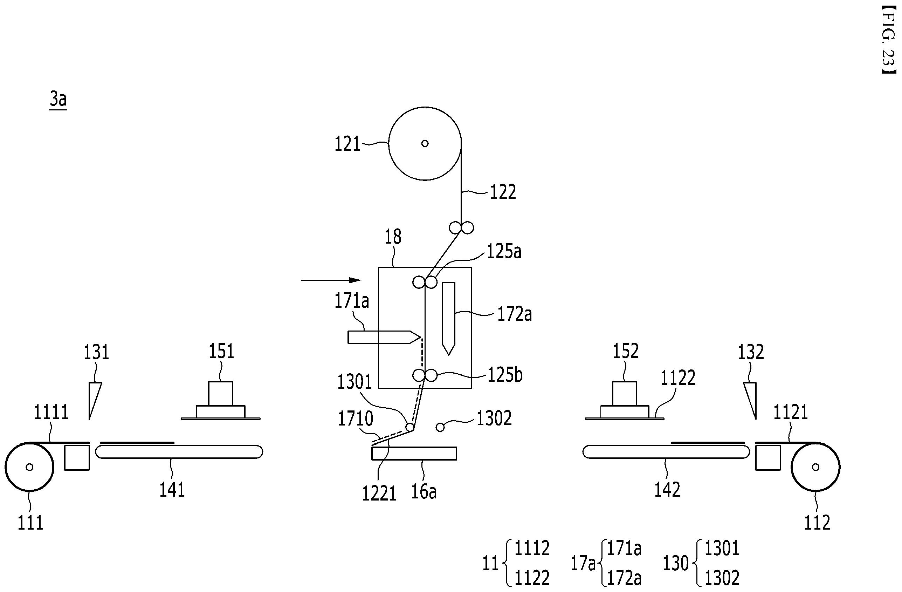

FIG. 23 is a battery cell manufacturing apparatus that has partially modified the battery cell manufacturing apparatus of FIG. 18, and is a schematic diagram illustrating a state in which an adhesive is applied to a first region of a separator sheet while a first upper nozzle linearly moves

Referring to FIG. 23, in the battery cell manufacturing apparatus 3a of the present embodiment, the table 16a may be fixed. Thereby, the electrode 11 and the separator sheet 122 can be stacked on the table 16 while the table 16a is fixed, so that the degree of alignment of the electrode 11 and the separator sheet 122 can be further improved.

Further, the separator guide 125, the first upper nozzle 171a, and the second upper nozzle 172a may linearly reciprocate left and right with respect to the table 16a. As an example, as shown in FIG. 23, as the first upper nozzle 171a linearly moves toward the second transfer device 142 on the basis of the table 16a, it applies an adhesive to the first region 1221 of the separator sheet 122 to form a first adhesive layer 1710.

Further, the pair of pressure rollers 130 may move together with the separator guide 125, the first upper nozzle 171a, and the second upper nozzle 172a while pressing one surface of the separator sheet 122. As an example, the first pressure roller 1301 moves along with the second pressure roller 1302, the first upper nozzle 171a, and the second upper nozzle 172a while pressing one surface of the separator sheet 122. Thereby, the pair of pressure rollers 130 may maintain the tension of the separator sheet 122. In addition, a height difference between the first upper nozzle 171a and the second upper nozzle 172a and the separator sheet 122 can be maintained. The pair of pressure rollers 130 will be described in detail with reference to FIG. 28, which will be described later.

As an example, the battery cell manufacturing apparatus 3a of the present embodiment may further comprise a separator guide 125, a first upper nozzle 171a, and a moving box 18 that accommodates the second upper nozzle 172a. That is, in the battery cell manufacturing apparatus 3a of the present embodiment, as the moving box 18 moves, the separator guide 125, the first upper nozzle 171a, and the second upper nozzle 172a can move simultaneously.

Thereby, the distance between the first upper nozzle 171a and the separator guide 125 and the distance between the second upper nozzle 172a and the separator guide 125 can be maintained constant, and the application reliability of the adhesive applied from the first upper nozzle 171a and the second upper nozzle 172a can be improved.

Further, the angle of the first upper nozzle 171a and/or the second upper nozzle 172a is rotated within the moving box 18, or the first upper nozzle 171a and the second upper nozzle 172a move, thereby capable of adjusting a height difference or an angle between the first upper nozzle 171a and/or the second upper nozzle 172a and the separator 122. Even in this case, the distance between the first upper nozzle 171a and the separator guide 125 and the distance between the second upper nozzle 172a and the separator guide 125 within the moving box 18 may be maintained the same, so that the application reliability of the adhesive applied from the first upper nozzle 171a and the second upper nozzle 172a can be further improved.

Using such a battery cell manufacturing apparatus 3a, a battery cell manufacturing method according to yet another embodiment of the present disclosure is performed as follows.

First, referring to FIGS. 17 and 23, when the first electrode sheet 1111 is unwound from the first electrode reel 111, the first cutter 131 cuts the first electrode sheet 1111 to form a plurality of first electrodes 1112 (S301).

Meanwhile, while the separator sheet 122 is unwound from the separator reel 121, an adhesive is applied to the first region 1221 of the separator sheet 122. At this time, the discharge port of the first upper nozzle 171 applies the adhesive toward the separator sheet 122 that has passed through the upper separator guide 205a. The separator sheet 122 applied with the adhesive passes through the lower separator guide 125b and is seated on the upper surface of the table 16 (S302). At this time, the separator sheet 122 moves in a state of being pressed by the first pressure roller 1301 and is seated on the upper surface of the table 16a. In some cases, the moving box 18 may linearly move toward the second transfer device 142.

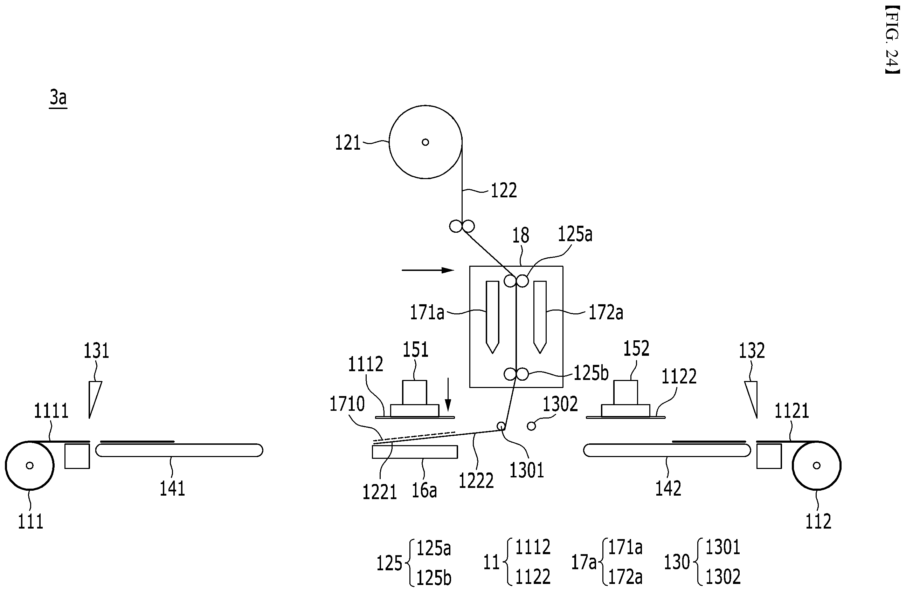

FIG. 24 is a schematic diagram showing a state in which a first electrode is seated on a first region of a separator sheet in the battery cell manufacturing apparatus of FIG. 23.

Further, referring to FIGS. 17 and 24, the first header 151 may linearly move on the table 16 while attracting the first electrode 1112. And, when the first header 151 is located above the table 16a, as shown in FIG. 24, the first header 151 seats the first electrode 1112 on the first region 1221 of the separator sheet 122 on which the first adhesive layer 1710 is formed (S303).

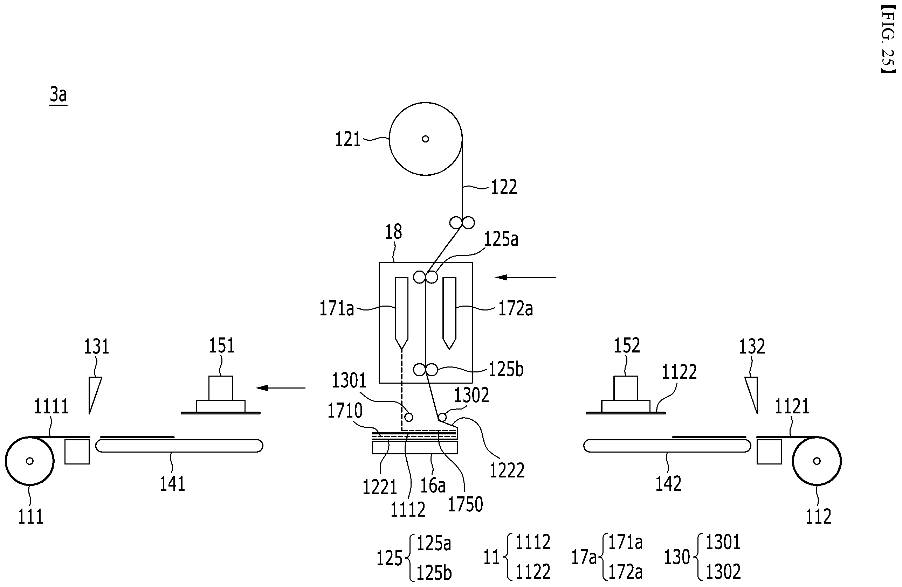

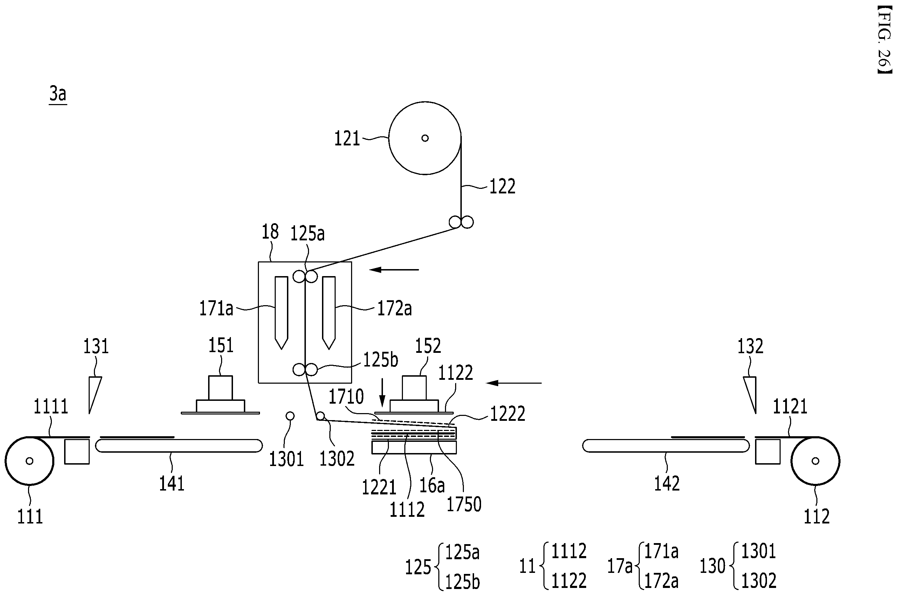

FIG. 25 is a schematic diagram showing a state in which an adhesive is applied to an upper portion of a first electrode while a first upper nozzle linearly moves in the battery cell manufacturing apparatus of FIG. 23. FIG. 26 is a schematic diagram showing a state in which in the battery cell manufacturing apparatus of FIG. 23, an adhesive is applied to a second region of a separator sheet while a second upper nozzle linearly moves, and a second electrode is seated in the second region of the separator sheet;

Further, referring to FIGS. 17, 25 and 26, after the first electrode 1112 is seated on the first region 1221 of the separator sheet 122, as the first upper nozzle 171a moves toward the first transfer device 141, the first upper nozzle 171a applies an adhesive to the upper portion of the first electrode 1112 to form a second adhesive layer 1750 (S304).

Further, an adhesive is applied to the second region 1222 of the separator sheet 122 unwound from the separator reel 121 to form a first adhesive layer 1710 (S305). The discharge port of the second upper nozzle 172 applies the adhesive toward the separator sheet 122 that has passed through the upper separator guide 205a. The separator sheet 122 applied with the adhesive passes through the lower separator guide 125b. At this time, the adhesive may be applied in a state in which one surface of the separator sheet 122 is pressed by the second pressure roller 1302, and the moving box 18 moves toward the first transfer device 141.

Further, referring to FIGS. 17, 25 and 26, as the separator guide 125 and the pair of pressure rollers 130 move toward the first transfer device 141 on the basis of the table 16a, one side of the separator sheet 122 is folded so that the second region 1222 of the separator sheet 122 covers the first electrode 1112 on which the second adhesive layer 1750 is formed (S306).

Steps S304, S305 and S306 may be performed sequentially, or all three steps may be performed simultaneously, and various applications can be made in accordance with the environment in which the present disclosure is realized, for example, S304 and S305 may proceed simultaneously, and S305 and S306 may proceed simultaneously.

Meanwhile, as shown in FIG. 23, when the second electrode sheet 1121 is unwound from the second electrode reel 112, the second cutter 132 cuts the second electrode sheet 1121. Then, a plurality of second electrodes 1122 are formed. After that, as shown in FIG. 26, when the second transfer device 142 transfers the second electrode 1122, the second header 152 attracts the second electrode 1122. And, if the second region 1222 of the separator sheet 122 covers the first electrode 1112, the second header 152 attracting the second electrode 1122 moves toward the upper portion of the second region 1222, so that the second electrode 1122 is seated on the second region 1222 where the first adhesive layer 1710 is formed.

And, as shown in FIG. 25, the second upper nozzle 172 applies the adhesive to the upper portion of the second electrode 1122. Here, as the second upper nozzle 172a moves toward the second transfer device 142, the second upper nozzle 172a may form a second adhesive layer 1750 on the second electrode 1122.

After that, as the separator guide 125 and the pair of pressure rollers 130 move toward the second transfer device 142 on the basis of the table 16a, the other side of the separator sheet 122 is folded, so that the first region 1221 of the separator sheet 122 covers the second electrode 1122 on which the second adhesive layer 1750 is formed.

That is, by repeating the above processes, a cell manufacturing method according to yet another embodiment of the present disclosure can be performed.

If the cell manufacturing method according to the embodiments of the present disclosure is performed, when stacking the electrode 11 and the separator sheet 122 in a Z-folding type, an adhesive is applied to the upper portion and the lower portion of the electrode 11, respectively, thereby capable of preventing the electrode 11 from separating from its fixed position.

FIG. 27 is a schematic diagram showing one embodiment of a lower separator guide 125b according to the present disclosure. The lower separator guide 125b may be applied to, for example, the battery cell manufacturing apparatuses 1, 2, 3, and 3a described above. The lower separator guide 125b may be provided with, for example, a pair of rollers, and for convenience of explanation, FIG. 27 shows only the rollers on one side.

The lower separator guide 125b includes at least one concave part 1125 on its surface. The concave part 1125 is provided at a position corresponding to the adhesive applied to the separator 122. When the separator 122 applied with the adhesive passes through the lower separator guide 125b, the adhesive applied to the separator 122 may pass through the concave part 1125. Thereby, the surface of the lower separator guide 125b can be prevented from being contaminated by the adhesive.

When the lower separator guide 125b is, for example, a pair of rollers, the concave part 1125 may preferably be a concave portion formed along the outer peripheral surface of the roller. The shape and structure of the lower separator guide 125b and the shape and structure of the concave part 1125 according to the present disclosure are not limited to those illustrated, and modifications and changes are possible to suit various environments in which the present disclosure is realized.

Further, FIG. 28 is a schematic diagram showing one embodiment of a pressure roller 130 according to the present disclosure. The pressure roller 130 can be applied to, for example, the battery cell manufacturing apparatuses 3 and 3a described above. The pressure roller 130 also includes at least one concave part 1130 on its surface, similarly to the lower separator guide 125b. The concave part 1130 of the pressure roller is provided at a position corresponding to the adhesive applied to the separator 122. The adhesive applied to the separator 122 can pass through the concave part 1130 of the pressure roller. Thereby, the surface of the lower separator guide 125b can be prevented from being contaminated by the adhesive.

In summary, the adhesive-applied portion of the separator 122 may pass through the concave part 1125 of the lower separator guide 125b and the concave part 1130 of the pressure roller 130.

When the pressure roller 130 is, for example, a roller, the concave part 1130 may preferably be a concave part formed along the outer peripheral surface of the roller. The shape, structure, and number of the pressure rollers 130 and the shape, structure, and number of the concave parts 1130 according to the present disclosure are not limited to those illustrated, and modifications and changes are possible to suit various environments in which the present disclosure is realized.

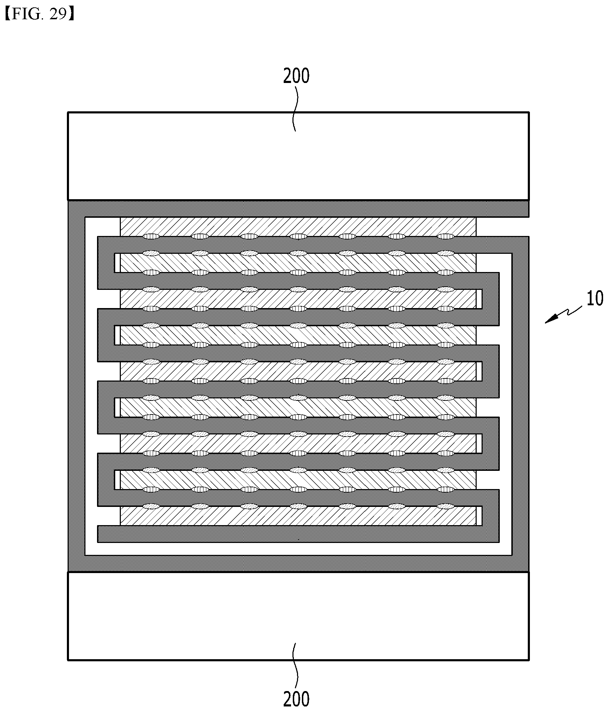

FIG. 29 is a schematic view showing one embodiment of a pressure jig according to the present disclosure.

The battery cell manufacturing apparatuses 1, 2, 3 and 3a according to embodiments of the present disclosure may further include a pressure jig 200 shown in FIG. 29. An electrode assembly 10 is provided in which electrodes and separator sheets that have undergone a series of steps in the above embodiments are alternately stacked, that is, in a zigzag manner.

The electrode assembly 10 is pressed in the pressure jig 200, and then the separator is wound. The electrode assembly 10, in which electrodes and separator sheets are alternately stacked, can be subjected to a pressing process, so that the thickness of the adhesive is minimized and uniform, the winding quality in the subsequent separator winding process can be improved, which can increase the stiffness of the finished battery cell.

Here, the zig-pressing process may include a process of applying and releasing pressure with the pressure jig 200 that presses both uppermost and lowermost surfaces of the electrode assemblies 10 stacked in a zigzag manner. That is, a one-cycle process in which the pressure jig 200 applies and releases pressure pressing the electrode assembly 10 can be repeated at least twice.

The one-cycle process in which the pressure jig 200 applies and releases pressure may be a process of directly exerting physical force on the adhesive being dissolved in a manner of alternating positive and negative pressures. Therefore, the effect of making the dissolution of the adhesive occur significantly better may be obtained.

In this case, a control device may be connected to the jig device for a more systematic operation. Thereby, the positive pressure time and the negative pressure time can be adjusted, and the magnitude of the positive pressure and the magnitude of the negative pressure can also be controlled. Through this, a more effective adhesive dissolving system can be realized.

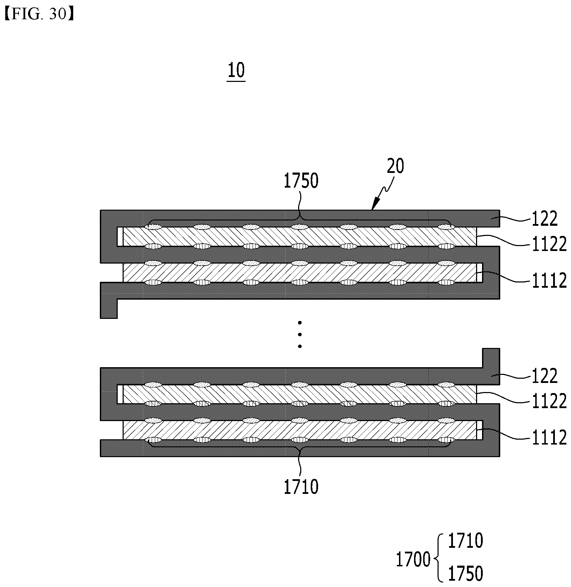

FIG. 30 is a cross-sectional view of an electrode assembly according to embodiments of the present disclosure.

Referring to FIG. 30, in the electrode assembly 10 in which electrodes and separator sheets are alternately stacked according to embodiments of the present disclosure, the electrode 11 includes a first electrode 1112 and a second electrode 1122, and the separator sheet 122 has a zigzag shape formed by folding at least twice.

Here, the separator sheet 122 is folded in a state where the first electrode 1112 is seated on the first region 1221 of the separator sheet 122, so that the second region 1222 of the separator 122 covers the electrode 11. Further, the second electrode 1122 is folded while being seated on the second region 1222 of the separator sheet 122, so that the first region 1221 of the separator sheet 122 covers the second electrode 1122.

In particular, in the electrode assembly 10 according to the present embodiment, the electrodes 11 may be stacked one by one on the first region 1221 or the second region 1222 of the separator sheet 122. At this time, after measuring the presence or absence of distortion, the electrode 11 may be stacked at an accurate position on the separator sheet 122 in a state where the position is corrected as necessary. Thereby, in the electrode assembly 10 according to the present embodiment, the degree of alignment between the electrode 11 and the separator sheet 122 can be further improved.

Here, an adhesive layer 1700 is formed between the electrode 11 and the separator sheet 122. More specifically, the adhesive layer 1700 includes a first adhesive layer 1710 and a second adhesive layer 1750. The first adhesive layer 1710 is located between the lower portion of the electrode 11 and the separator sheet 122, and the second adhesive layer 1750 may be located between the upper portion of the electrode 11 and the separator sheet 122.

As an example, the first adhesive layer 1710 and the second adhesive layer 1750 may each be formed by applying an adhesive in the form of a plurality of dots. However, as described above in the battery cell manufacturing apparatuses 1, 2, 3 and 3a, the shapes of the first adhesive layer 1710 and the second adhesive layer 1750 are not limited thereto, and may be formed in various shapes.

Thus, in the electrode assembly 10 according to the present embodiment, the adhesive layer 1700 is formed between the electrode 11 and the separator sheet 122, and thus, even in the case of a low-cost separator with excessively low adhesive strength, the electrode 11 and the separator can be stably fixed to each other, thereby capable of preventing the electrode 11 from being separated from its fixed position. In addition, the electrode assembly 10 of the present embodiment covers the upper and lower portions of the electrode 11 in a shape in which one separator sheet 122 is folded, so that the degree of alignment of the electrode 11 and the process efficiency can be further improved.

In addition, since there is no need to perform a laminating process as in a conventional case, the rate of defects in the process caused by high heat and pressure can be reduced. And, since the laminator can be removed, the volume of the manufacturing apparatus can be reduced and the manufacturing process can be simplified.

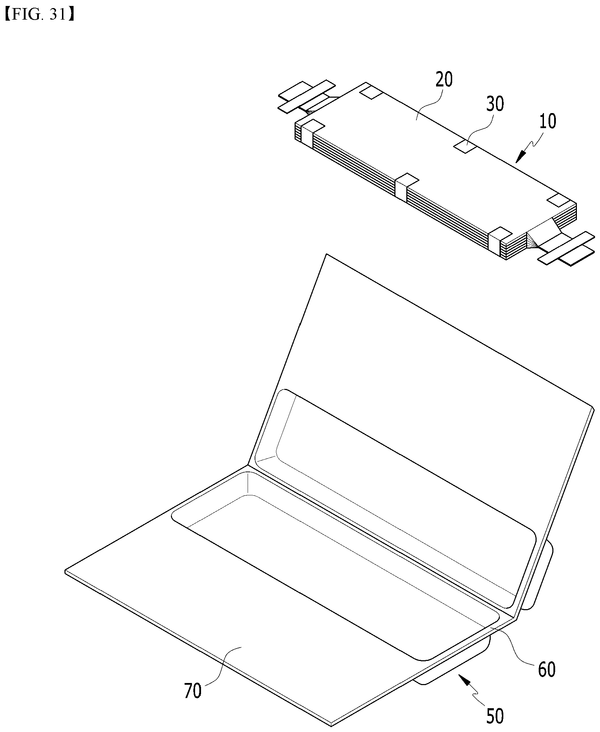

FIG. 31 is an exploded perspective view of a battery cell according to embodiments of the present disclosure.

Referring to FIGS. 30 and 31, a battery cell according to another embodiment of the present disclosure is a battery cell comprising the electrode assembly 10 described above, wherein the battery cell includes a battery case 50 the accommodates the electrode assembly 10 together with an electrolyte solution, and an adhesive layer 1700 is dissolved in the electrolyte solution.

Here, a fixing member such as a fixing tape 30 may be attached to the outside of the electrode assembly 10. Thereby, the stacked and aligned state of the electrode 11 and the separator sheet 122 can be maintained. The electrode assembly 10 to which the fixing tape 30 is attached may be called a final electrode assembly 20.

The battery case 50 includes an accommodation part 60 in which the electrode assembly 10 or the final electrode assembly 20 is mounted, and a sealing part 70 that seals the outer periphery of the accommodation part 60. As an example, the battery case 50 may be a laminate sheet including a resin layer and a metal layer. More specifically, the battery case 50 is made of a laminate sheet, and may be composed of an outer resin layer that forms the outermost shell, a barrier metal layer that prevents materials from penetrating, and an inner resin layer for sealing.

In addition, the accommodation part 60 of the battery case 50 may accommodate the electrolyte solution together with the electrode assembly 10. Here, the adhesive layer 1700 contained in the electrode assembly 10 may be dissolved into the electrolyte solution. In particular, in the battery cell according to the present embodiment, in an activation process such as a formation process, the adhesive layer 1700 contained in the electrode assembly 10 may be dissolved into the electrolyte solution under high temperature and/or pressurized conditions.

More specifically, in the battery cell according to the present embodiment, when the adhesive layer 1700 formed between the electrode 11 of the electrode assembly 10 and the separator sheet 122 is dissolved into the electrolyte solution, little or no adhesive 14 may remain on the surface of the electrode 11.

Unlike the same, since the separator sheet 122 is generally a porous sheet, a part of the adhesive 14 may permeate the separator sheet 122. However, even in the case of the adhesive layer 1700 permeating the separator sheet 122, most or all thereof may be dissolved in the electrolyte solution, and in this process, traces of the application of the adhesive layer 1700 may remain on the separator sheet 122.

Here, traces of the application of the adhesive layer 1700 may mean that the adhesive component contained in the adhesive layer 1700 does not remain, but a part of the outer surface of the separator sheet 122 is deformed by the adhesive layer 1700. However, it is not limited thereto, and the traces of application of the adhesive layer 1700 may mean a trace that allows confirmation of whether the adhesive has been applied in various ways, such as a trace that allows the naked eye to confirm whether or not the adhesive has been applied. Thereby, the application trace of the adhesive layer 1700 formed on the separator sheet 122 may be formed at the same location as the location where the adhesive is applied.

Thereby, in the battery cell according to the present embodiment, the adhesive layer 1700 is completely dissolved on the surface of the electrode 11 or the separator 122, and the unreacted region due to the adhesive layer 1700 disappears, thus preventing performance degradation and realizing excellent battery performance.

While the invention has been described in detail with reference to preferred embodiments of the present disclosure, it will be understood by those skilled in the art that various changes and modifications can be made therein without departing from the spirit and scope of the invention as defined by the appended claims.

### [Description of Reference Numerals]

1, 1a: cell manufacturing apparatus
11: electrode
16, 16a: table
17: nozzle
111: first electrode reel
112: second electrode reel
121: separator reel
122: separator sheet
125: separator guide
125a: upper separator guide
125b: lower separator guide
1125: concave part
130: pressure roller
1130: concave part
13 1: first cutter
132: second cutter
141: first transfer device
142: second transfer device
151: first header
152: second header
171, 171a: first upper nozzle
172, 172a: second upper nozzle
1111: first electrode sheet
1112: first electrode
1121: second electrode sheet
1122 second electrode
1221 first region
1222 second region
1710: first adhesive layer
1750: second adhesive layer

## Claims

1. An apparatus for manufacturing a battery cell, the apparatus comprising:
an electrode reel on which an electrode sheet having plurality of electrodes formed thereon is unwound;
a separator reel in which a separator sheet is unwound, with the separator sheet being folded when the electrode is seated, covering the electrode and being stacked with the electrode;
a table on which the electrode and the separator sheet are seated;
a pair of separator guides that guide a folding direction of the separator sheet; and
a pair of upper nozzles that apply an adhesive to at least a part of the separator sheet passing between the pair of separator guides.

2. The apparatus according to claim 1, wherein:
among the pair of separator guides, a first separator guide that guides the separator sheet applied with the adhesive comprises at least one concave part, and
the concave part is provided at a position corresponding to the adhesive applied to the separator sheet.

3. The apparatus according to claim 2, wherein:
the adhesive is applied in a dot shape or in a linear shape along the longitudinal direction of the separator sheet.

4. The apparatus according to any one of claims 1 to 3, wherein:
the pair of upper nozzles can rotate to apply an adhesive to at least a part of the electrode seated on the table, and
the pair of separator guides and the pair of upper nozzles linearly reciprocate left and right with respect to the table, with the table being fixed.

5. The apparatus according to claim 4, wherein:
the electrode reel comprises,
a first electrode reel on which a first electrode sheet having a plurality of first electrodes formed thereon is unwound; and
a second electrode reel on which a second electrode sheet having a plurality of second electrodes formed thereon is unwound.

6. The apparatus according to claim 5, wherein:
the pair of upper nozzles comprises a first upper nozzle and a second upper nozzle,
the first upper nozzle applies the adhesive to the upper portion of the first electrode or to the separator sheet passing through the pair of separator guides, and
the second upper nozzle applies the adhesive to the upper portion of the second electrode or to the separator sheet passing through the pair of separator guides.

7. The apparatus according to claim 6, wherein:
the first upper nozzle and the second upper nozzle are arranged on both sides with the pair of separator guides interposed therebetween.

8. The apparatus according to claim 6, wherein:
the first electrode is seated on the first region of the separator sheet, and
the second electrode is seated on the second region of the separator sheet.

9. The apparatus according to claim 8, wherein:
when the first electrode is seated on the first region of the separator sheet, the first upper nozzle linearly moves on the first electrode, and
when the second electrode is seated on the second region of the separator sheet, the second upper nozzle linearly moves on the second electrode.

10. The apparatus according to claim 9, wherein:
when the first upper nozzle applies the adhesive to at least a part of the upper portion of the first electrode, the first separator guide linearly moves in a direction in which the separator sheet covers the first electrode, and
when the second upper nozzle applies the adhesive to at least a part of the upper portion of the second electrode, the first separator guide linearly moves in a direction in which the separator sheet covers the second electrode.

11. The apparatus according to claim 8, comprising:
a lower nozzle that applies the adhesive to a lower portion of the first electrode and a lower portion of the second electrode, respectively.

12. The apparatus according to claim 11, further comprising:
a first header that attracts the first electrode to seat it in the first region; and
a second header that attracts the second electrode to seat it in the second region.

13. The apparatus according to claim 12, wherein:
when the first electrode is attracted to the first header, the lower nozzle applies the adhesive to the lower portion of the first electrode, and
when the second electrode is attracted to the second header, the lower nozzle applies the adhesive to the lower portion of the second electrode.

14. The apparatus according to claim 11, further comprising:
a first transfer device that transfers the first electrode toward the table; and
a second transfer device that transfers the second electrode toward the table.

15. The apparatus according to claim 14, wherein:
the first transfer device comprises a first groove that is opened toward the first electrode, so that the lower nozzle applies the adhesive to the lower portion of the first electrode through the first groove, and
the second transfer device comprises a second groove that is opened toward the second electrode, so that the lower nozzle applies the adhesive to the lower portion of the second electrode through the second groove.

16. The apparatus according to any one of claims 1 to 3, wherein:
the electrode reel comprises,
a first electrode reel on which a first electrode sheet having a plurality of first electrodes formed thereon is unwound; and
a second electrode reel on which a second electrode sheet having a plurality of second electrodes formed thereon is unwound,
the table performs a rotational reciprocating motion between the first electrode reel and the second electrode reel, and
the pair of separator guides and the pair of upper nozzles linearly reciprocate left and right with respect to the table.

17. The apparatus according to claim 16, wherein:
the first electrode is seated on the first region of the separator sheet, and
the second electrode is seated on the second region of the separator sheet.

18. The apparatus according to claim 17, wherein:
the pair of upper nozzles comprises a first upper nozzle and a second upper nozzle,
the first upper nozzle applies the adhesive to at least a part of a second region of the separator sheet passing between the pair of separator guides, and
the second upper nozzle applies the adhesive to at least a part of a first region of the separator sheet passing between the pair of separator guides.

19. The apparatus according to claim 18, wherein:
when the pair of upper nozzles respectively apply the adhesive onto the separator sheet, a discharge port of the first upper nozzle or a discharge port of the second upper nozzle rotates in a direction adjacent to the separator sheet.

20. The apparatus according to claim 18, wherein:
the first upper nozzle and the second upper nozzle are arranged on both sides with the pair of separator guides interposed therebetween.

21. The apparatus according to claim 18, wherein:
the first upper nozzle linearly moves in a direction away from the table on the second region of the separator sheet at the same time when the first electrode is seated on the first region of the separator sheet, and
the second upper nozzle linearly moves in a direction away from the table on the first region of the separator sheet at the same time when the second electrode is seated on the second region of the separator sheet.

22. The apparatus according to claim 21, wherein:
the pair of separator guides linearly move in a direction toward the second electrode reel at the same time when the first upper nozzle applies the adhesive to at least a part of the second region of the separator sheet, and
the pair of separator guides linearly move in a direction toward the first electrode reel at the same time when the second upper nozzle applies the adhesive to at least a part of the first region of the separator sheet.

23. The apparatus according to claim 22, wherein:
when the application of the adhesive by the first upper nozzle is completed, the pair of separator guides linearly move in a direction in which the second region of the separator sheet applied with the adhesive covers the first electrode, and
when the application of the adhesive by the second upper nozzle is completed, the pair of separator guides linearly move in a direction in which the first region of the separator sheet applied with the adhesive covers the second electrode.

24. The apparatus according to claim 16, comprising:
a lower nozzle that applies the adhesive to a lower portion of the first electrode and a lower portion of the second electrode, respectively.

25. The apparatus according to claim 24, further comprising:
a first header that attracts the first electrode to seat it in the first region; and
a second header that attracts the second electrode to seat it in the second region,
wherein the first header and the second header perform rotational reciprocating motion in a direction being located on the table.

26. The apparatus according to claim 25, wherein:
when the first electrode is attracted to the first header, the lower nozzle applies the adhesive to the lower portion of the first electrode, and
when the second electrode is attracted to the second header, the lower nozzle applies the adhesive to the lower portion of the second electrode.

27. The apparatus according to claim 24, further comprising:
a first transfer device that transfers the first electrode toward the table; and
a second transfer device that transfers the second electrode toward the table.

28. The apparatus according to claim 27, wherein:
the first transfer device comprises a first groove that is opened toward the first electrode, so that the lower nozzle applies the adhesive to the lower portion of the first electrode through the first groove, and
the second transfer device comprises a second groove that is opened toward the second electrode, so that the lower nozzle applies the adhesive to the lower portion of the second electrode through the second groove.

29. The apparatus according to any one of claims 1 to 3, wherein:
the pair of upper nozzles may rotate to apply an adhesive to at least a part of the electrode seated on the table, and
the apparatus comprise a pair of pressure rollers that press the separator sheet guided by the pair of separator guides.

30. The apparatus according to claim 29, wherein:
the pressure roller comprises at least one concave part on its surface, and
the concave part is provided at a position corresponding to the adhesive applied to the separator sheet.

31. The apparatus according to claim 30, wherein:
the at least one pressure roller is located between the pair of separator guides and the table.

32. The apparatus according to claim 31, wherein:
the at least one pressure roller is located between the pair of separator guides.

33. The apparatus according to claim 32, wherein:
the electrode reel comprises,
a first electrode reel on which a first electrode sheet having a plurality of first electrodes formed thereon is unwound; and
a second electrode reel on which a second electrode sheet having a plurality of second electrodes formed thereon is unwound.

34. The apparatus according to claim 33, further comprising:
a first transfer device that transfers the first electrode toward the table; and
a second transfer device that transfers the second electrode toward the table.

35. The apparatus according to claim 33, wherein:
the pair of upper nozzles comprises a first upper nozzle and a second upper nozzle, and
the pair of upper nozzles respectively apply an adhesive to the separator sheet or the electrode located on the table.

36. The apparatus according to claim 35, wherein:
the first upper nozzle and the second upper nozzle are arranged on both sides with the pair of separator guides interposed therebetween.

37. The apparatus according to claim 36, wherein:
the at least one pressure roller comprises a first pressure roller and a second pressure roller, and
the first pressure roller is located between the first upper nozzle and the separator guide, with the second pressure roller being located between the second upper nozzle and the separator guide.

38. The apparatus according to claim 34, wherein:
the first electrode is seated on the first region of the separator sheet, and
the second electrode is seated on the second region of the separator sheet.

39. The apparatus according to claim 38, further comprising:
a first header that attracts the first electrode to seat it in the first region; and
a second header that attracts the second electrode to seat it in the second region.

40. The apparatus according to claim 38, wherein:
the pair of separator guides, the pair of upper nozzles, and the at least one pressure roller are fixed, and
the table linearly reciprocates toward the first transfer device and the second transfer device.

41. The apparatus according to claim 38, wherein:
the table is fixed, and
the pair of separator guides, the pair of upper nozzles, and the at least one pressure roller linearly reciprocate toward the first transfer device and the second transfer device.

42. The apparatus according to claim 40, further comprising:
a moving box that accommodates the pair of separator guides and the pair of upper nozzles therein.

43. A method for manufacturing a battery cell, the method comprising the steps of:
cutting a first electrode sheet unwound from a first electrode reel to form a plurality of first electrodes;
applying the adhesive through the first upper nozzle to a first region of the separator sheet unwound from the separator reel between a pair of separator guides, and seating the separator sheet on the table along the separator guide;
seating the first electrode on a first region of the separator sheet;
applying an adhesive to an upper portion of the first electrode through the first upper nozzle; and
folding the separator sheet in a folding direction guided by the separator guide, so that a second region of the separator sheet covers the first electrode.

44. The method according to claim 43, wherein:
before the step of seating the first electrode on the first region of the separator sheet,
the method further comprises applying an adhesive to the lower portion of the first electrode through a lower nozzle.

45. The method according to claim 43, wherein:
after the step of covering the upper portion of the first electrode, the method further comprises:
cutting the second electrode sheet unwound from the second electrode reel to form a plurality of second electrodes;
applying an adhesive to the lower portion of the second electrode through a lower nozzle;
seating the second electrode on a second region of the separator sheet;
applying an adhesive to the upper portion of the second electrode through a second upper nozzle; and
folding the separator sheet in a folding direction guided by the separator guide, so that a first region of the separator sheet covers the second electrode.

46. The method according to claim 45, wherein:
the table is fixed, and
the pair of separator guides, the first upper nozzle, and the second upper nozzle linearly reciprocate with respect to the table.

47. A method for manufacturing a battery cell, the method comprising the steps of:
cutting a first electrode sheet unwound from a first electrode reel to form a plurality of first electrodes;
seating the separator sheet unwound from the separator reel on a table along a pair of separator guides;
applying an adhesive to the lower portion of the first electrode through a lower nozzle;
seating the first electrode on a first region of the separator sheet;
applying an adhesive through a first upper nozzle to at least a part of the second region of the separator sheet between the pair of separator guides; and
folding the separator sheet in a folding direction guided by the separator guide, so that a second region of the separator sheet applied with the adhesive covers the first electrode.

48. The method according to claim 47, wherein:
after the step of covering the upper portion of the first electrode, the method further comprises:
cutting the second electrode sheet unwound from the second electrode reel to form a plurality of second electrodes;
applying an adhesive to the lower portion of the second electrode through a lower nozzle;
seating the second electrode on a second region of the separator sheet;
applying an adhesive through a first upper nozzle to at least a part of the first region of the separator sheet between the pair of separator guides; and
folding the separator sheet in a folding direction guided by the separator guide, so that a first region of the separator sheet applied with the adhesive covers the second electrode.

49. The method according to claim 48, wherein:
the table performs a rotational reciprocating motion between the first electrode reel and the second electrode reel, and
the separator guide and the pair of upper nozzles linearly reciprocate left and right with respect to the table.

50. The method according to claim 49, wherein:
in the step of applying the adhesive through the first upper nozzle and the step of applying the adhesive through the second upper nozzle,
a discharge port of the first upper nozzle or a discharge port of the second upper nozzle rotates in a direction adjacent to the separator sheet.

51. A method for manufacturing a battery cell, the method comprising the steps of:
cutting a first electrode sheet unwound from a first electrode reel to form a plurality of first electrodes;
applying an adhesive through a first upper nozzle to a first region of a separator sheet unwound from a separator reel between a pair of separator guides, and seating the separator sheet on a table along the separator guide;
seating the first electrode on a first region of the separator sheet;
applying an adhesive through a first upper nozzle to the upper portion of the first electrode; and
folding the separator sheet in a folding direction guided by the separator guide, so that a second region of the separator sheet covers the first electrode,
wherein a first pressure roller presses the separator sheet guided by the separator guide.

52. The method according to claim 51, wherein:
after the step of covering the upper portion of the first electrode, the method further comprises:
cutting the second electrode sheet unwound from the second electrode reel to form a plurality of second electrodes;
applying an adhesive through a second upper nozzle to a second region of the separator sheet between the pair of separator guides;
seating the second electrode on a second region of the separator sheet;
applying an adhesive to the upper portion of the second electrode through the second upper nozzle; and
folding the separator sheet in a folding direction guided by the separator guide, so that a first region of the separator sheet covers the second electrode,
wherein a second pressure roller presses the separator sheet guided by the separator guide.

53. The method according to claim 52, wherein:
the separator guide, the first upper nozzle, the second upper nozzle, the first pressure roller, and the second pressure roller are fixed, and
the table linearly reciprocates toward the first transfer device and the second transfer device.

54. The method according to claim 53, wherein:
the table is fixed, and
the separator guide, the first upper nozzle, the second upper nozzle, the first pressure roller, and the second pressure roller linearly reciprocate toward the first transfer device and the second transfer device.

55. The method according to any one of claim 43, 47 and 51, wherein:
among the pair of separator guides, a first separator guide that guides the separator sheet applied with the adhesive comprises at least one concave part, and
the concave part is provided at a position corresponding to the adhesive applied to the separator sheet.

56. The method according to claim 55, wherein:
the adhesive is applied in a dot shape or in a linear shape along the longitudinal direction of the separator sheet.

57. The method according to claim 51, wherein:
the pressure roller comprises at least one concave part on its surface, and
the concave part is provided at a position corresponding to the adhesive applied to the separator sheet.

58. An electrode assembly manufactured by the battery cell manufacturing method according to any one of claims 43, 47 and 51, in which electrodes and separator sheets are alternately stacked,
wherein the electrode comprises a first electrode and a second electrode,
the separator sheet has a zigzag shape formed by being folded at least twice,
the separator sheet is folded in a state where the first electrode is seated on the first region of the separator sheet so that the second region of the separator sheet covers the first electrode, and is folded in a state where the second electrode is seated on the second region so that the first region of the separator sheet covers the second electrode, and
an adhesive layer is formed between the electrode and the separator sheet.

59. The electrode assembly according to claim 58, wherein:
the adhesive layer comprises a first adhesive layer and a second adhesive layer,
the first adhesive layer is located between the lower portion of the electrode and the separator sheet, and
the second adhesive layer is located between the upper portion of the electrode and the separator sheet.

60. The electrode assembly according to claim 59, wherein:
the first adhesive layer and the second adhesive layer are respectively formed by applying an adhesive in the form of a plurality of dots.

61. A battery cell comprising the electrode assembly of claim 58,
wherein the battery cell comprises a battery case that accommodates the electrode assembly together with an electrolyte solution, and
wherein the adhesive layer is dissolved in the electrolyte solution.
